# EUROPEAN PATENT APPLICATION

(11) **EP 4 657 288 A1**
(43) Date of publication of application: **03.12.2025**
(21) Application number: 24827787.3
(22) Date of filing: 26.11.2024
(51) Int. Cl.: G06F 21/44, G06F 1/3228

(54) **ELECTRONIC DEVICE, AND METHOD FOR PROVIDING IDENTIFICATION INFORMATION OF ELECTRONIC DEVICE**

(30) Priority: 09.04.2024 KR 20240048306; 24.07.2024 KR 20240098204
(71) Applicant: Samsung Electronics Co., Ltd., Gyeonggi-do 16677 (KR)
(72) Inventor: LEE, Kyunghwan, Suwon-si Gyeonggi-do 16677 (KR); KANG, Sangwoo, Suwon-si Gyeonggi-do 16677 (KR); CHOI, Hangseok, Suwon-si Gyeonggi-do 16677 (KR)
(74) Representative: Gulde & Partner
(86) International application number: PCT/KR2024/018872
(87) International publication number: WO 2025/216384

(57) **Abstract**

According to an embodiment, an electronic device may include a power management integrated circuit (PMIC), at least one processor, a connecting terminal, at least one memory that stores identification information of the electronic device, a first transmission line electrically connected to the connecting terminal and the PMIC, a control circuit electrically connected to the at least one memory, and a switching circuit electrically connected between the connecting terminal and the control circuit. When a voltage applied through the first transmission line from an external electronic device connected to the connecting terminal is within a predetermined first range, the switching circuit may be configured to electrically connect the connecting terminal and the control circuit by changing a state of a switch from a first state to a second state such that the control circuit transmits the identification information to the external electronic device through the connecting terminal by supplying power to the control circuit.

## Description

### [Technical Field]

Embodiments disclosed in this specification relate to an electronic device and a method for providing identification information of the electronic device.

### [Background Art]

A user of an electronic device may identify identification information of the electronic device by using a dedicated cable with a specific pin and a dedicated reader to obtain the identification information of the electronic device. For example, a user may connect a dedicated reader to the electronic device through a dedicated cable, may allow the electronic device to enter a recovery mode, and then may read out identification information of the electronic device through the dedicated reader. Moreover, the user may also identify identification information of a terminal from information engraved and recorded on a surface of the terminal during a production stage.

The above information may be provided as a related art for the purpose of enhancing the understanding of this disclosure. No claim or determination is made as to whether any of the foregoing may be applied as a prior art in connection with the disclosure.

### [Disclosure]

### [Technical Solution]

According to an embodiment, an electronic device may include a power management integrated circuit (PMIC), at least one processor, a connecting terminal, at least one memory that stores identification information of the electronic device, a first transmission line electrically connected to the connecting terminal and the PMIC, a control circuit electrically connected to the at least one memory, and a switching circuit electrically connected between the connecting terminal and the control circuit. When a voltage applied through the first transmission line from an external electronic device connected to the connecting terminal is within a predetermined first range, the switching circuit may be configured to electrically connect the connecting terminal and the control circuit by changing a state of a switch from a first state to a second state such that the control circuit transmits the identification information to the external electronic device through the connecting terminal by supplying power to the control circuit.

According to an embodiment, an electronic device may include a PMIC, at least one processor, a connecting terminal including a power pin and a communication pin, a voltage detection circuit, an authentication circuit, at least one memory, and a control circuit electrically connected to the connecting terminal, the voltage detection circuit, the authentication circuit, and the at least one memory. The control circuit may be configured to detect a voltage applied through the power pin from an external electronic device connected to the connecting terminal, to receive authentication information from the external electronic device through the communication pin when the detected voltage is within a predetermined first range, to determine whether the received authentication information is valid, by using the authentication circuit, and to transmit identification information of the electronic device stored in the at least one memory to the external electronic device through the communication pin based on the determination that the received authentication information is valid.

According to an embodiment, a method of an electronic device may include detecting a voltage obtained from an external electronic device, receiving authentication information from the external electronic device when the detected voltage is within a predetermined first range, determining whether the received authentication information is valid, and transmitting the identification information of the electronic device to the external electronic device based on a determination that the received authentication information is valid.

According to an embodiment, a computer-readable storing medium storing instructions, when executed by a control circuit of an electronic device, may cause the control circuit to detect a voltage obtained from an external electronic device, to receive authentication information from the external electronic device when the detected voltage is within a predetermined first range, to determine whether the received authentication information is valid, and to transmit the identification information of the electronic device to the external electronic device based on a determination that the received authentication information is valid.

### [Description of Drawings]

FIG. 1 is a block diagram showing a configuration of an electronic device, according to an embodiment.
FIG. 2 is a flowchart of a method in which an electronic device transmits identification information to an external electronic device, according to an embodiment.
FIG. 3 is a flowchart of a method in which an electronic device transmits identification information to an external electronic device, according to an embodiment.
FIG. 4 is a circuit diagram in which an electronic device transmits identification information to an external electronic device, according to an embodiment.
FIG. 5 is a circuit diagram in which an electronic device transmits identification information to an external electronic device, according to an embodiment.
FIG. 6 is a diagram illustrating pins of a connecting terminal of USB type-C, according to an embodiment.
FIG. 7 is a circuit diagram in which an electronic device transmits identification information to an external electronic device, according to an embodiment.
FIG. 8 is a circuit diagram in which an electronic device transmits identification information to an external electronic device, according to an embodiment.
FIG. 9 is a circuit diagram in which an electronic device transmits identification information to an external electronic device, according to an embodiment.
FIG. 10 is a block diagram of an electronic device configuration for transmitting identification information to an external electronic device, according to an embodiment.
FIG. 11 is a block diagram of an electronic device in a network environment, according to various embodiments.

With regard to description of drawings, the same or similar components will be marked by the same or similar reference signs.

### [Mode for Invention]

Hereinafter, various embodiments of the disclosure may be described with reference to accompanying drawings. However, it should be understood that this is not intended to limit the disclosure to specific implementation forms and includes various modifications, equivalents, and/or alternatives of embodiments of the disclosure.

There is a need of securely transmitting information of an electronic device to an external device. The electronic device according to various embodiments of the present application may minimize the risk of unauthorized access to the identification information, and securely transmit the same to an external device. The electronic device is configured to transmit identification information under specific conditions, thereby enhancing security control over data exchange. For instance, the electronic device engages in communication when the external device is an intended (or dedicated), compatible and authentic device for access to the identification information, so as to avoid a risk of security vulnerabilities or leakage of a user's personal information. The above technical effects are illustrative only, and not to be limiting. Further advantages are apparent to the person skilled in the art.

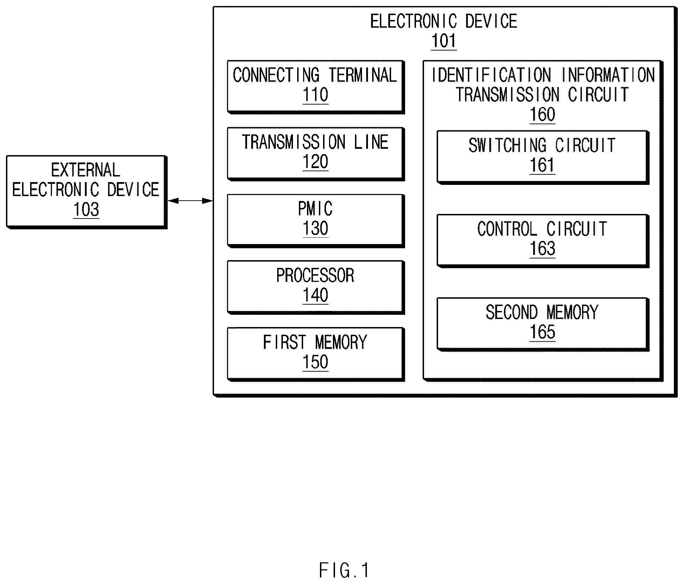

FIG. 1 is a block diagram showing a configuration of an electronic device, according to an embodiment.

Referring to FIG. 1, according to an embodiment, an electronic device 101 may communicate with an external electronic device 103. For example, the external electronic device 103 may communicate with the electronic device 101 to obtain identification information of the electronic device 101. According to an embodiment, the electronic device 101 may communicate with the external electronic device 103 through a direct connection.

According to an embodiment, while the electronic device 101 is in an off state, the electronic device 101 may be connected to the external electronic device 103 to transmit identification information to the external electronic device 103. For example, when the electronic device 101 is connected to the external electronic device 103 while a processor 140 is powered off or in an inactive state, the electronic device 101 may obtain a power supply voltage from the external electronic device 103. For example, when the electronic device 101 obtains the power supply voltage from the external electronic device 103, at least some circuits of the electronic device 101 (e.g., an identification information transmission circuit 160) may be activated. For example, the electronic device 101 may obtain identification information from the external electronic device 103 by using the activated identification information transmission circuit 160.

According to an embodiment, while being turned on, the electronic device 101 may be connected to the external electronic device 103 to transmit identification information to the external electronic device 103. For example, when the electronic device 101 is connected to the external electronic device 103 while the processor 140 is powered on or in an active state, the electronic device 101 may identify the power supply voltage from the external electronic device 103. When the power supply voltage identified from the external electronic device 103 is within a specific range, the electronic device 101 may transmit identification information of the electronic device 101 to the external electronic device 103.

According to an embodiment, the electronic device 101 may communicate with the external electronic device 103 through at least one of single wire (1-wire), a universal serial bus (USB) (e.g., USB type-A, USB type-B, USB type-C), an inter-integrated circuit (I2C), a serial peripheral interface (SPI), a system management bus (SMB), or UNI/O. According to an embodiment, the communication method through direct connection between the electronic device 101 and the external electronic device 103 is not limited thereto. For example, the electronic device 101 may communicate with the external electronic device 103 in a communication method including at least one of a multimedia card (MMC), a peripheral component interconnect-express (PCI-E), a serial advanced technology attachment (SATA), a parallel advanced technology attachment (PATA), a small computer system interface (SCSI), an enhanced small device interface (ESDI), or an integrated drive electronics (IDE).

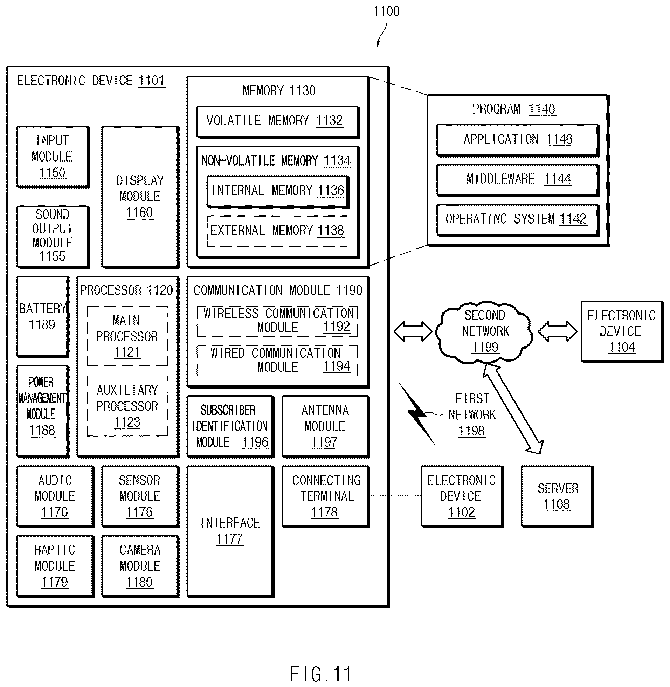

According to an embodiment, the electronic device 101 may include a connecting terminal 110 (e.g., a connecting terminal 1178 of FIG. 11), at least one transmission line (e.g., a transmission line 120, a wired communication module 1194 and/or an interface 1177 of FIG. 11), a power management circuit (PMIC) 130 (e.g., a power management module 1188 of FIG. 11), at least one processor (e.g., the processor 140, a processor 1120 of FIG. 11), a first memory 150 (e.g., a memory 1130 of FIG. 11), and the identification information transmission circuit 160. For example, the electronic device 101 may include any electronic device such as a smart phone, a laptop, a desktop, a TV, a smart pad, a tablet PC, a wearable device, a connected car, and/or a portable terminal.

According to an embodiment, the electronic device 101 may be connected to the external electronic device 103 through the connecting terminal 110. According to an embodiment, the connecting terminal 110 may include a connector. The connector may physically connect an electronic device and an external electronic device. For example, the connecting terminal 110 may include a HDMI connector, an USB connector, an SD card connector, or an audio connector (e.g., a headphone connector).

According to an embodiment, when the electronic device 101 and the external electronic device 103 are connected to each other through a connecting terminal (e.g., the connecting terminal 110) of USB type-C, the transmission line 120 may include any pin line (e.g., a VBUS pin line, a configuration channel (CC) pin line, a sideband use (SBU) line, or the like) of the connecting terminal of USB type-C. For example, the pin line may be connected to a pin of the connecting terminal 110. For example, the pin line may correspond to at least part of a transmission line (e.g., the transmission line 120) that electrically connects the pin of the connecting terminal 110 to internal components of the electronic device 101.

According to an embodiment, the electronic device 101 may obtain a voltage from the external electronic device 103 connected to the connecting terminal 110 through the transmission line 120. According to an embodiment, the electronic device 101 may obtain a voltage within a predetermined first range from the external electronic device 103 through the transmission line 120. For example, the predetermined first range may correspond to a range greater than or equal to a first voltage and less than or equal to a second voltage. For example, the second voltage may correspond to a voltage less than the minimum voltage for booting on the electronic device 101. For example, the second voltage may correspond to a voltage less than the minimum voltage for activating the processor 140 of the electronic device 101. For example, the first voltage may correspond to the minimum voltage for activating the identification information transmission circuit 160. For example, when the voltage obtained from the external electronic device 103 is within a predetermined first range (e.g., when the obtained voltage is greater than or equal to the first voltage and less than or equal to the second voltage), the electronic device 101 may activate the identification information transmission circuit 160 while the electronic device 101 is in an off state (e.g., when the processor 140 is in an inactive state).

According to an embodiment, the electronic device 101 may obtain a voltage within a predetermined second range from the external electronic device 103 through the transmission line 120. For example, the predetermined second range may correspond to a range greater than or equal to a third voltage and less than or equal to a fourth voltage. For example, the third voltage may correspond to a voltage greater than the second voltage. For example, the third voltage may correspond to the minimum voltage for booting on the electronic device 101. For example, the fourth voltage may correspond to the maximum voltage for booting on the electronic device 101. For example, the third voltage may correspond to the minimum voltage for activating the processor 140 of the electronic device 101. For example, the fourth voltage may correspond to the maximum voltage that the external electronic device 103 is capable of applying to the electronic device 101. For example, the fourth voltage may correspond to the maximum voltage, which is set by the electronic device 101 and which is capable of being applied to the electronic device 101. For example, the fourth voltage may correspond to the maximum voltage for activating the processor 140 of the electronic device 101. For example, when the voltage obtained from the external electronic device 103 is within a predetermined second range (e.g., when the obtained voltage is greater than or equal to the third voltage and less than or equal to the fourth voltage), the electronic device 101 may deactivate the identification information transmission circuit 160 while the electronic device 101 is in an on state (e.g., when the processor 140 is in an active state).

According to an embodiment, the electronic device 101 may obtain a voltage within a predetermined third range from the external electronic device 103 through the transmission line 120. For example, the predetermined third range may correspond to a range less than or equal to the first voltage. For example, when the voltage obtained from the external electronic device 103 is less than the first voltage, all components of the electronic device 101 may not be activated or may not operate.

According to an embodiment, the electronic device 101 is described as being capable of obtaining a voltage from the external electronic device 103, but is not limited thereto. For example, the electronic device 101 may obtain a voltage, a current, and/or power from the external electronic device 103. For example, the external electronic device 103 may apply (or supply) the voltage, the current, and/or the power to the electronic device 101.

According to an embodiment, the PMIC 130 may manage the power supplied to the electronic device 101. According to an embodiment, the PMIC 130 may receive the voltage (alternatively, the power or the current) applied to the electronic device 101 from the external electronic device 103. The PMIC 130 may activate the processor 140 by supplying at least part of the received voltage (alternatively, the power or the current) to the processor 140. The PMIC 130 may be referenced by the power management module 1188 of FIG. 11.

According to an embodiment, at least one processor may be electrically connected to components of the electronic device 101. For example, the at least one processor (e.g., the processor 140) may be connected to the connecting terminal 110, at least one transmission line (e.g., the transmission line 120), the first memory 150, and the identification information transmission circuit 160. For example, the at least one processor may be wiredly connected to components of the electronic device 101. The at least one processor may be composed of a single chip or a plurality of chips. For example, the at least one processor may include at least one processing circuitry including a central processing unit (CPU), an application processor (AP), a micro-processor unit (MPU), a communication processor (CP), a system on chip (SoC), and/or an integrated circuit (IC).

According to an embodiment, the first memory 150 and/or a second memory 165 may include an internal memory and/or an external memory. For example, the internal memory may include at least one of a volatile memory (e.g., a dynamic random access memory (DRAM), a static random access memory (SRAM), or a synchronous DRAM (SDRAM)), and a nonvolatile memory (e.g., a programmable read-only memory (PROM), a one-time PROM (OTPROM), an erasable PROM (EPROM), an electrically erasable and PROM (EEPROM), a mask ROM, a flash ROM, a flash memory, a hard drive, or a solid state drive (SSD)). The external memory may include at least one of a flash drive (e.g., compact flash), secure digital (SD), micro-SD, mini-SD, extreme digital (xD), a multi-media card (MMC), or a memory stick.

According to an embodiment, the first memory 150 may store instructions capable of being executed by at least one processor (e.g., the processor 140). The first memory 150 may store at least one data associated with an operation of the electronic device 101 or may store an instruction associated with functional operations of components of the electronic device 101. For example, the first memory 150 may store at least one application that is mounted in the preloaded form in the manufacture of the electronic device 101 or is downloaded in a third party form from an online market (e.g., an app store). For example, the at least one application may include a speech recognition application that supports the operation of a speech recognition service. According to an embodiment, the first memory 150 may store identification information of the electronic device 101. For example, when the identification information transmission circuit 160 does not include the second memory 165, the first memory 150 may store the identification information of the electronic device 101.

According to an embodiment, the identification information transmission circuit 160 may transmit identification information of the electronic device 101 to the external electronic device 103. For example, the identification information may include a unique number (e.g., an international mobile equipment identity (IMEI)) for identifying the electronic device 101. According to an embodiment, the identification information transmission circuit 160 may include a switching circuit 161, a control circuit 163, and the second memory 165.

According to an embodiment, the second memory 165 may store identification information of the electronic device 101. According to an embodiment, the control circuit 163 may store identification information of the electronic device 101 in the second memory 165. According to an embodiment, the second memory 165 of the identification information transmission circuit 160 may be omitted. For example, when the second memory 165 is omitted, the identification information of the electronic device 101 may be stored in the first memory 150.

According to an embodiment, the control circuit 163 may transmit identification information of the electronic device 101 to the external electronic device 103. For example, when a voltage within a predetermined first range is applied from the external electronic device 103 connected to the connecting terminal 110 while the electronic device 101 is turned off, the control circuit 163 may be activated. For example, when being activated, the control circuit 163 may transmit identification information of the electronic device 101 to the external electronic device 103. For example, the control circuit 163 may be activated even while the electronic device 101 is turned on.

According to an embodiment, the processor 140 may directly read identification information stored in the second memory 165 while the electronic device 101 is turned on. The processor 140 may transmit the read identification information of the electronic device 101 to the external electronic device 103.

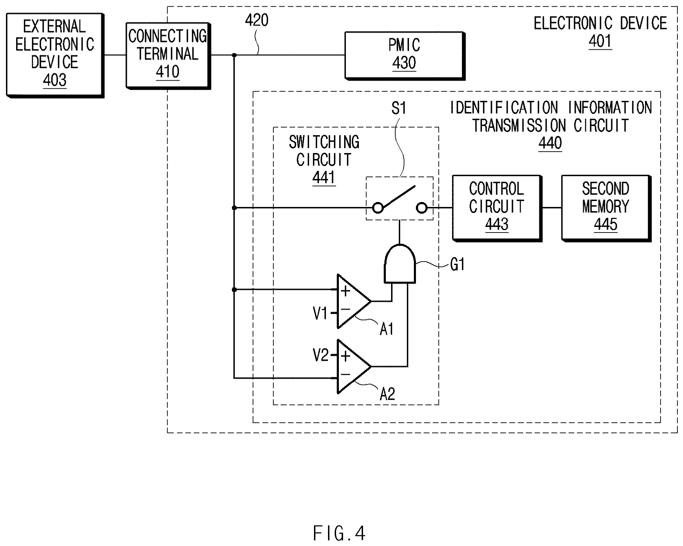

According to an embodiment, when a voltage within a predetermined first range is applied, the switching circuit 161 may change the state of a switch (e.g., a switching element S1 in FIG. 4) from a first state to a second state. For example, the first state may correspond to an open state of the switch. For example, the second state may correspond to a closed state of the switch. According to an embodiment, when a voltage within a predetermined first range is not applied from the external electronic device 103, the switching circuit 161 may open the switch. According to an embodiment, when a voltage within a predetermined first range is applied from the external electronic device 103, the switching circuit 161 may close the switch. When a voltage within a predetermined first range is applied, the switching circuit 161 may close the switch. When a voltage (e.g., a voltage greater than or equal to the third voltage and less than or equal to the fourth voltage) within a predetermined second range is applied, the switching circuit 161 may open the switch. According to an embodiment, when closing the switch, the switching circuit 161 may electrically connect the control circuit 163 and the connecting terminal 110. For example, when the switching circuit 161 closes the switch, the control circuit 163 may be activated while the electronic device 101 is turned off. For example, when a voltage within a predetermined first range is applied, the identification information transmission circuit 160 may be activated while the electronic device 101 is turned off. It is readily apparent to the skilled person that the switching circuit of the present application can be diversely constructed, e.g., according to any of FIGS. 4, 5, 7 and 8 as discussed below, or any other suitable arrangements known in the art. Thus, the present application is not to be limited in terms of the structure of the switching circuit.

According to an embodiment, when the switching circuit 161 opens the switch, the switching circuit 161 may electrically disconnect the control circuit 163 and the connecting terminal 110. The switching circuit 161 may isolate the identification information transmission circuit 160 from at least one (e.g., a connecting terminal 410 or the transmission line 120) of the other components of the electronic device 101 by disconnecting the control circuit 163 and the connecting terminal 110.

According to an embodiment, when the control circuit 163 is electrically connected to the connecting terminal 110, the control circuit 163 may transmit identification information of the electronic device 101 to the external electronic device 103 by using the transmission line 120. For example, when the control circuit 163 is electrically connected to the connecting terminal 110 and is capable of communicating with the external electronic device 103, the control circuit 163 may transmit the identification information of the electronic device 101 stored in the second memory 165 to the external electronic device 103.

According to an embodiment, the control circuit 163 may transmit the identification information by using the transmission line 120, which is identical to the transmission line 120 to which a voltage is applied from the external electronic device 103. For example, when the voltage is applied from the external electronic device 103 through a first transmission line (e.g., a VBUS pin line of a connecting terminal of USB type-C), the control circuit 163 may transmit the identification information of the electronic device 101 to the external electronic device 103 by using the same first transmission line. The control circuit 163 may also transmit the identification information by using the transmission line 120, which is different from the transmission line 120 to which a voltage is applied from the external electronic device 103. For example, when the voltage is applied from the external electronic device 103 through the first transmission line (e.g., the VBUS pin line of the connecting terminal of USB type-C), the control circuit 163 may transmit the identification information of the electronic device 101 by using a second transmission line (e.g., a CC pin line of the connecting terminal of USB type-C) which is different from the first transmission line.

According to an embodiment, when the control circuit 163 is electrically connected to the connecting terminal 110, the control circuit 163 may perform an authentication function. According to an embodiment, when the control circuit 163 is electrically connected to the connecting terminal 110, the control circuit 163 may receive authentication information from the external electronic device 103. For example, the authentication information may correspond to information for determining the validity of the external electronic device 103 such that the control circuit 163 transmits the identification information of the electronic device 101. For example, the determining of the validity of the external electronic device 103 may include determining whether the control circuit 163 may transmit the identification information of the electronic device 101. For example, when the identification information of the electronic device 101 is transmitted to any external device, there is a risk of security vulnerabilities or leakage of a user's personal information. The control circuit 163 may transmit identification information of the electronic device 101 to the authenticated external electronic device 103 based on the determination of the validity of the external electronic device 103. For example, the control circuit 163 may prevent the identification information of the electronic device 101 from being transmitted to any external electronic device, which has not been authenticated, by transmitting the identification information of the electronic device 101 to the external electronic device that has successfully authenticated based on the authentication information received from the external electronic device.

According to an embodiment, the control circuit 163 may receive authentication information from the external electronic device 103 and may compare the received authentication information with authentication information stored in the second memory 165. When the authentication information received from the external electronic device 103 matches the authentication information stored in the second memory 165, the control circuit 163 may transmit the identification information of the electronic device 101 to the external electronic device 103.

Each of the components of the electronic device 101 described may include a singular entity or a plural of entities. For example, some of the plurality of entities may be placed to be separate from another component. According to an embodiment, one or more of the components of the electronic device 101 described above may be omitted or one or more other components may be added. According to an embodiment, components of the electronic device 101 may omit at least some of the operations (e.g., operations of the control circuit 163) of the components of the electronic device 101 described above or may additionally perform one or more other operations.

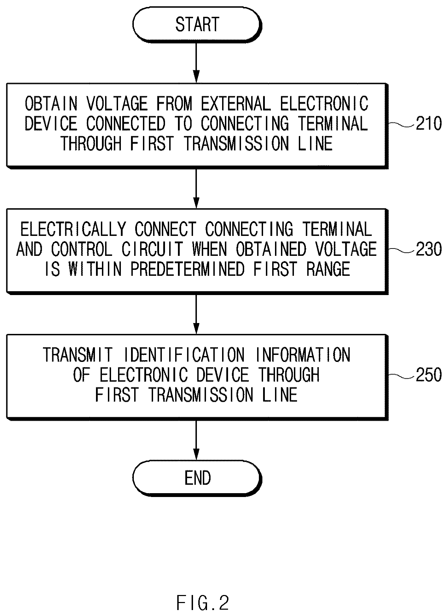

FIG. 2 is a flowchart of a method in which an electronic device transmits identification information to an external electronic device, according to an embodiment. Hereinafter, descriptions identical to those of FIG. 1 will be omitted or briefly described.

In operation 210, an electronic device (e.g., the electronic device 101 of FIG. 1) may obtain a voltage from an external electronic device (e.g., the external electronic device 103 of FIG. 1) connected to a connecting terminal (e.g., the connecting terminal 110 of FIG. 1) through a first transmission line (e.g., the transmission line 120 of FIG. 1). For example, the electronic device 101 may obtain the voltage from the external electronic device 103 through the transmission line 120 in an off state.

In operation 230, the electronic device 101 may electrically connect the connecting terminal 110 and the control circuit 163 when the obtained voltage is within a predetermined first range. For example, when the voltage obtained from the external electronic device 103 by the electronic device 101 is within the predetermined first range, the control circuit 163 may be electrically connected to the connecting terminal 110. According to an embodiment, when the electronic device 101 is in a default state, the control circuit 163 may be electrically disconnected from the connecting terminal 110. For example, the default state may include a state where the electronic device 101 is not connected to the external electronic device 103 and/or a state where a voltage within a predetermined second range is applied from the external electronic device 103 connected through the connecting terminal 110. According to an embodiment, when obtaining the voltage within the predetermined first range from the external electronic device 103 in the default state, the electronic device 101 may electrically connect the connecting terminal 110 and the control circuit 163. For example, the predetermined first range may correspond to a range of a voltage less than a voltage for activating the electronic device 101. For example, even when the voltage within the predetermined first range is applied from the external electronic device 103, the electronic device 101 may be in an off state (e.g., the processor 140 may be in an inactive state).

In operation 250, the electronic device 101 may transmit identification information of the electronic device 101 through the first transmission line (e.g., the transmission line 120 of FIG. 1). According to an embodiment, the electronic device 101 may be connected to the external electronic device 103 through the connecting terminal 110 to perform wired communication. According to an embodiment, when being electrically connected to the connecting terminal 110, the control circuit 163 may be activated. The electronic device 101 may transmit the identification information to the external electronic device 103 by using the activated control circuit 163. The electronic device 101 may transmit the identification information to the external electronic device 103 by using a 1-wire communication method. For example, the electronic device 101 may transmit the identification information to the external electronic device 103 in a power line communication (PLC) method.

The sequence of operations described above with reference to FIG. 2 is merely an example and embodiments of the disclosure are not limited thereto. For example, at least some of the operations may be executed in a sequence different from the sequence of FIG. 2 or may be executed substantially concurrently with other operations of FIG. 2. At least some of the operations described above with reference to FIG. 2 may be omitted.

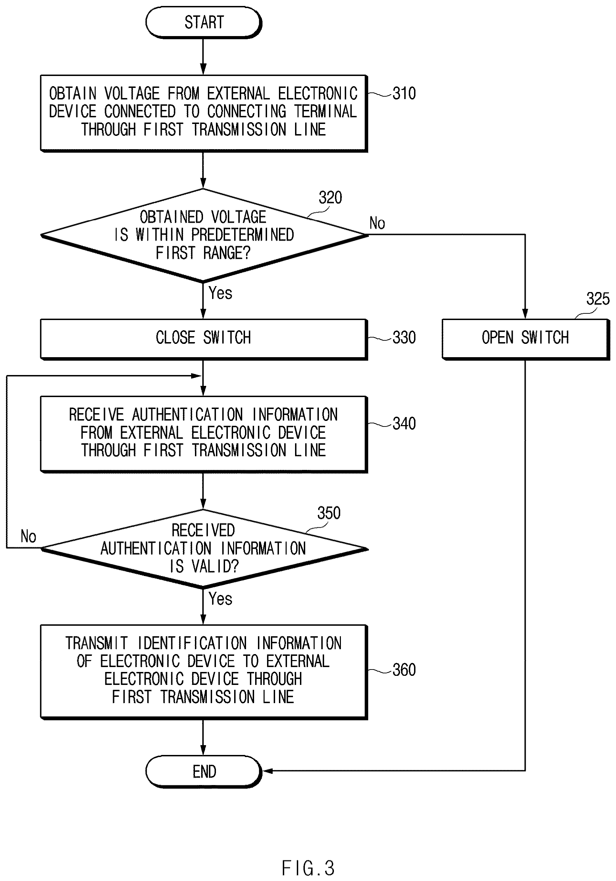

FIG. 3 is a flowchart of a method in which an electronic device transmits identification information to an external electronic device, according to an embodiment. Hereinafter, descriptions identical to those of FIG. 1 will be omitted or briefly described.

In operation 310, an electronic device (e.g., the electronic device 101 of FIG. 1) may obtain a voltage from an external electronic device (e.g., the external electronic device 103 of FIG. 1) connected to a connecting terminal (e.g., the connecting terminal 110 of FIG. 1) through a first transmission line (e.g., the transmission line 120 of FIG. 1). Hereinafter, descriptions identical to those of FIG. 2 will be omitted or briefly described. Operation 310 may be referenced by operation 210 of FIG. 2.

In operation 320, the electronic device 101 may determine whether the obtained voltage is within a predetermined first range. For example, the predetermined first range is as described above in FIG. 1. For example, the predetermined first range may correspond to a range greater than or equal to a first voltage and less than or equal to a second voltage. For example, the range greater than or equal to the first voltage and less than or equal to the second voltage may correspond to a range less than the minimum voltage for booting on the electronic device 101. For example, the range greater than or equal to the first voltage and less than or equal to the second voltage may correspond to a range less than the minimum voltage for activating the processor 140 of the electronic device 101.

According to an embodiment, the electronic device 101 may determine whether the obtained voltage is within the predetermined first range, by detecting a voltage applied through a first transmission line. For example, the electronic device 101 may determine whether an applied voltage is within the predetermined first range, by using a comparator. A method of determining whether the applied voltage is within the predetermined first range by using the comparator may be further described in FIG. 4.

When the voltage obtained from the external electronic device 103 is within a predetermined second range (e.g., operation 320-No), in operation 325, the electronic device 101 may open a switch of a switching circuit (e.g., the switching circuit 161 of FIG. 1). For example, the predetermined second range may correspond to a range of a voltage applied by a general USB device, not a dedicated host device for obtaining identification information of the electronic device 101. According to an embodiment, when the obtained voltage is within the predetermined second range, the electronic device 101 may open the switch of the switching circuit 161. For example, the electronic device 101 may electrically disconnect the connecting terminal 110 and the control circuit 163 by opening the switch of the switching circuit 161. According to an embodiment, the electronic device 101 may electrically disconnect the connecting terminal 110 and the control circuit 163 to deactivate the control circuit 163. For example, the electronic device 101 may electrically isolate the identification information transmission circuit 160 from at least one (e.g., the connecting terminal 110 or the transmission line 120) of other component of the electronic device 101 by deactivating the control circuit 163. When the voltage obtained from the external electronic device 103 is within the predetermined first range (e.g., operation 320-Yes), in operation 330, the electronic device 101 may close the switch of the switching circuit 161. For example, when the voltage obtained from the external electronic device 103 is within a predetermined first range, the electronic device 101 may close the switch of the switching circuit 161 even when the electronic device 101 is turned off. According to an embodiment, the electronic device 101 may electrically connect the connecting terminal 110 and the control circuit 163 by closing the switch of the switching circuit 161. The electronic device 101 may activate the control circuit 163 by electrically connecting the connecting terminal 110 and the control circuit 163.

In operation 340, the control circuit 163 may receive authentication information from the external electronic device 103 through the first transmission line. According to an embodiment, when the switch of the switching circuit 161 is closed and the control circuit 163 is activated, the control circuit 163 may receive the authentication information from the external electronic device 103. For example, the authentication information may correspond to information for determining the validity of the external electronic device 103 such that the control circuit 163 transmits the identification information. For example, the authentication information may include information related to a request for the identification information of the electronic device 101.

In operation 350, the control circuit 163 may determine whether the received authentication information is valid. According to an embodiment, the control circuit 163 may receive authentication information from the external electronic device 103 and may compare the received authentication information with authentication information stored in the second memory 165. For example, when the authentication information received from the external electronic device 103 matches the authentication information stored in the second memory 165, the control circuit 163 may determine that the received authentication information is valid. When the received authentication information does not match the authentication information stored in the second memory 165 (e.g., operation 350-No), the electronic device 101 may request authentication information and/or may receive authentication information from the external electronic device 103 by performing operation 340 again.

When determining that the authentication information received from the external electronic device 103 is valid (e.g., operation 350-Yes), in operation 360, the control circuit 163 may transmit the identification information of the electronic device 101 to the external electronic device 103 through the first transmission line. According to an embodiment, the control circuit 163 may transmit identification information to the external electronic device 103 by using a 1-wire communication method. For example, when the received authentication information is valid, the control circuit 163 may transmit identification information through the same first transmission line as the first transmission line to which the voltage is supplied. When the received authentication information is valid, the control circuit 163 may read the identification information of the electronic device 101 stored in the second memory 165. The control circuit 163 may transmit the read identification information to the external electronic device 103.

The sequence of operations described above with reference to FIG. 3 is merely an example and embodiments of the disclosure are not limited thereto. For example, at least some of the operations may be executed in a sequence different from the sequence of FIG. 3 or may be executed substantially concurrently with other operations of FIG. 3. At least some of the operations described above with reference to FIG. 3 may be omitted.

FIG. 4 is a circuit diagram in which an electronic device transmits identification information to an external electronic device, according to an embodiment. Hereinafter, descriptions identical to those of FIG. 3 will be omitted or briefly described.

According to an embodiment, an electronic device 401 (e.g., the electronic device 101 of FIG. 1) may be connected to an external electronic device 403 (e.g., the external electronic device 103 of FIG. 1) through the connecting terminal 410 (e.g., the connecting terminal 110 of FIG. 1). According to an embodiment, the electronic device 401 may include the connecting terminal 410, a transmission line 420, a PMIC 430 (e.g., the PMIC 130 of FIG. 1) and an identification information transmission circuit 440 (e.g., the identification information transmission circuit 160 of FIG. 1). The identification information transmission circuit 440 may include a switching circuit 441 (e.g., the switching circuit 161 of FIG. 1), a control circuit 443 (e.g., the control circuit 163 of FIG. 1), and a second memory 445 (e.g., the second memory 165 of FIG. 2). The external electronic device 403 may be electrically connected to components (e.g., the connecting terminal 410, the PMIC 430, and the identification information transmission circuit 440) of the electronic device 401 through the transmission line 420 (e.g., the transmission line 120 of FIG. 1).

According to an embodiment, the connecting terminal 410 may receive a voltage from the external electronic device 403 electrically connected. For example, the external electronic device 403 may include a general USB device and/or a dedicated host device for obtaining identification information of the electronic device 401. The connecting terminal 410 may electrically connect the PMIC 430 and the identification information transmission circuit 440 to the external electronic device 403.

According to an embodiment, the identification information transmission circuit 440 may receive a voltage, which is applied from the external electronic device 403 connected to the connecting terminal 110, through the transmission line 420. According to an embodiment, when the electronic device 401 is in a default state, the identification information transmission circuit 440 may be deactivated. For example, the identification information transmission circuit 440 may electrically disconnect the control circuit 443 and the connecting terminal 410 in the default state. For example, the default state may include a state where the electronic device 401 is not connected to the external electronic device 403 and/or a state where a voltage within a predetermined second range is applied from the external electronic device 403.

According to an embodiment, when the voltage applied from the external electronic device 403 is within a predetermined first range, the identification information transmission circuit 440 may be activated. According to an embodiment, when the voltage applied from the external electronic device 403 connected to the connecting terminal 410 is within the predetermined first range, the switching circuit 441 may electrically connect the control circuit 443 and the connecting terminal 410. For example, when the applied voltage is within the predetermined first range, the switching circuit 441 may electrically connect the control circuit 443 and the connecting terminal 410 by using a switching element S1, two comparators A1 and A2 and an AND gate element G1.

According to an embodiment, the two comparators A1 and A2 may output a signal indicating the comparison result depending on the voltage applied through the transmission line 420. According to an embodiment, when the voltage applied to input terminal (+) through the transmission line 420 is greater than or equal to a first voltage V1, the comparator A1 may output a high-level signal. When the voltage is less than the first voltage V1 or there is no applied voltage, the comparator A1 may output a low-level signal. For example, a high-level signal may include a digital signal of '1', and a low-level signal may include a digital signal of '0'. When the voltage applied to input terminal (-) through the transmission line 420 is less than or equal to a second voltage V2, the comparator A2 may output a high-level signal. When the voltage is greater than the second voltage V2, the comparator A2 may output a low-level signal.

According to an embodiment, the signal output through the two comparators A1 and A2 may be input to the AND gate element G1. According to an embodiment, the switching element S1 may be opened or closed based on the signal output through the two comparators A1 and A2. For example, when the voltage applied from the external electronic device 403 through the transmission line 420 is greater than or equal to the first voltage V1 and less than or equal to the second voltage V2 (e.g., when the output signal of G1 is at a high level), the switching element S1 may be closed. For example, when the voltage applied from the external electronic device 403 through the transmission line 420 is less than the first voltage V1 or greater than the second voltage V2 or there is no applied voltage (e.g., when the output signal of G1 is at a low level), the switching element S1 may be opened. For example, in an embodiment of FIG. 4, when a dedicated host device that applies a voltage within a predetermined first range is connected, the electronic device 401 may activate the identification information transmission circuit 440 even when the electronic device 401 is turned off. When a general USB device is connected to the electronic device 401, a normal voltage within a predetermined second range is applied, and thus the switching element S1 may be opened. When the switching element S1 is opened, the identification information transmission circuit 440 may be deactivated.

Referring to FIG. 4, the switching circuit 441 is illustrated as including, but not limited to, the two comparators A1 and A2 and the one AND gate element G1. For example, the switching circuit 441 may not include a comparator. For example, the switching circuit 441 may include at least one comparator. For example, the switching circuit 441 may include at least one logic circuit gate element, or may be implemented without any logic circuit gate element.

According to an embodiment, when the level of the voltage applied through the transmission line 420 from the external electronic device 403 connected to the connecting terminal 410 is greater than or equal to the first voltage V1 and less than or equal to the second voltage V2, the control circuit 443 may be activated by being electrically connected to the connecting terminal 410. According to an embodiment, when being activated, the control circuit 443 may receive authentication information from the external electronic device 403 through the transmission line 420. The control circuit 443 may determine whether the received authentication information is valid. For example, the receiving, by the control circuit 443, of authentication information and the determining whether the received authentication information is valid may be referenced by operation 340 and operation 350 of FIG. 3.

According to an embodiment, when determining that the received authentication information is valid, the control circuit 443 may transmit the identification information of the electronic device 401 to the external electronic device 403. According to an embodiment, when the received authentication information is valid, the control circuit 443 may transmit the identification information of the electronic device 401, which is stored in the second memory 445, to the external electronic device 403. For example, the control circuit 443 may read the identification information of the electronic device 401 stored in the second memory 445. For example, the control circuit 443 may transmit identification information of the electronic device 401, which is read from the second memory 445, to the external electronic device 403 through the transmission line 420.

According to an embodiment, when the switching element S1 is opened and the identification information transmission circuit 440 is deactivated, a processor (e.g., the processor 140 of FIG. 1) may identify the identification information of the electronic device 401, which is stored in the second memory 445, by using a circuit unit different from the transmission line 420. For example, when the electronic device 401 is in a powered-on state and/or an activated state, the processor may identify the identification information of the electronic device 401, which is stored in the second memory 445, through another circuit unit (not shown) electrically connected to the second memory 445. In an embodiment, the processor may transmit the identified identification information of the electronic device 401 to the external electronic device 403.

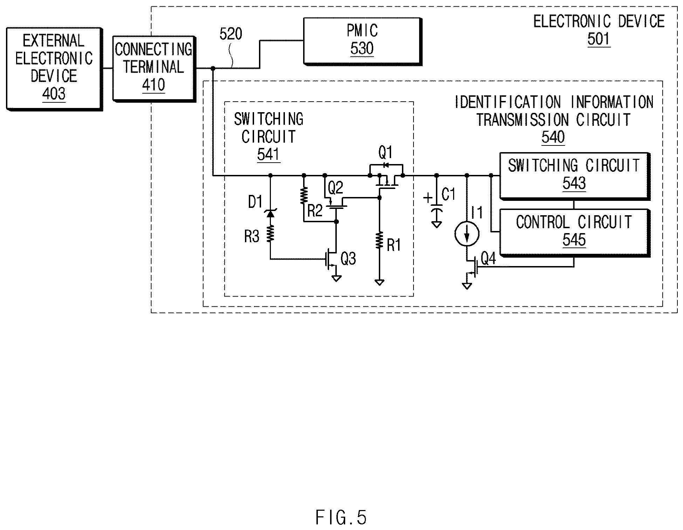

FIG. 5 is a circuit diagram in which an electronic device transmits identification information to an external electronic device, according to an embodiment. Hereinafter, descriptions identical to those of FIG. 4 will be omitted or briefly described.

According to an embodiment, an electronic device 501 (e.g., the electronic device 101 of FIG. 1) may be connected to an external electronic device 503 (e.g., the external electronic device 103 of FIG. 1 or the external electronic device 403 of FIG. 4) through a connecting terminal 510 (e.g., the connecting terminal 110 of FIG. 1 or the connecting terminal 410 of FIG. 4). According to an embodiment, the electronic device 501 may include the connecting terminal 510, a transmission line 520, a PMIC 530 (e.g., the PMIC 130 of FIG. 1 or the PMIC 430 of FIG. 4), and an identification information transmission circuit 540 (e.g., the identification information transmission circuit 160 of FIG. 1 or the identification information transmission circuit 440 of FIG. 4). The identification information transmission circuit 540 may include a switching circuit 541 (e.g., the switching circuit 161 of FIG. 1 or the switching circuit 441 of FIG. 4), a control circuit 543 (e.g., the control circuit 163 of FIG. 1 or the control circuit 443 of FIG. 4), and a PLC circuit 545. The external electronic device 503 may be electrically connected to at least one (e.g., the connecting terminal 110, the PMIC 530, and/or the identification information transmission circuit 540) of the components of the electronic device 501 through the transmission line 520 (e.g., the transmission line 120 of FIG. 1).

According to an embodiment, when the voltage applied from the external electronic device 503 is within a predetermined first range, the identification information transmission circuit 540 may activate the control circuit 543. According to an embodiment, when the electronic device 501 is in a default state, the switching circuit 541 may electrically disconnect the control circuit 543 and the connecting terminal 510. The default state is as described in FIG. 4. For example, when there is no voltage applied through the transmission line 520 because the external electronic device 503 is not connected, a first switch (a first switch Q1) may be turned off because there is no voltage applied to the source of the first switch. For example, when a first voltage of a specific level or higher, which is capable of turning on the first switch Q1, is applied from the external electronic device 503, the first voltage may be applied to the source of the first switch Q1. When the first voltage is applied to the source of the first switch Q1, the gate voltage of the first switch Q1 is pulled down, and thus the first switch Q1 may be turned on. For example, when a second voltage greater than the first voltage and a breakdown voltage Vz of a Zener diode D1 is applied from the external electronic device 503, a voltage may be applied to the gate of a third switch Q3. When the voltage is applied to the gate of the third switch Q3, the third switch Q3 may be turned on. When the third switch Q3 is turned on, the gate of a second switch Q2 may be connected to a ground. When the gate of the second switch Q2 is connected to the ground, a voltage is applied to the source of the second switch Q2 from an external electronic device, and thus the second switch Q2 may be turned on. When the second switch Q2 is turned on, levels of the source voltage and the gate voltage of the first switch Q1 may be the same as each other. When the source voltage and the gate voltage of the first switch Q1 are the same as each other, the first switch Q1 may be turned off. According to an embodiment, when the voltage applied from the external electronic device 503 through the transmission line 520 is greater than or equal to the first voltage and less than or equal to the second voltage, the switching circuit 541 may turn on the first switch Q1. When the first switch Q1 is turned on, the control circuit 543 may be electrically connected to the connecting terminal 510. The first voltage may correspond to the first voltage V1 of FIG. 4, and the second voltage may correspond to the second voltage V2 of FIG. 4, but is not limited thereto. For example, the first voltage and/or the second voltage described in FIG. 5 may be different from the first voltage V1 and/or the second voltage of FIG. 4, respectively.

According to an embodiment, when the level of the voltage applied through the transmission line 520 from the external electronic device 503 connected to the connecting terminal 510 is greater than or equal to the first voltage and less than or equal to the second voltage, the control circuit 543 may be activated by being electrically connected to the connecting terminal 510. According to an embodiment, when being activated, the control circuit 543 may receive authentication information from the external electronic device 503 through the transmission line 520. The control circuit 543 may determine whether the received authentication information is valid. For example, the receiving, by the control circuit 543, of authentication information and the determining whether the received authentication information is valid may be referenced by operation 340 and operation 350 of FIG. 3.

According to an embodiment, when determining that the received authentication information is valid, the control circuit 543 may transmit the identification information of the electronic device 501 to the external electronic device 503. According to an embodiment, when the received authentication information is valid, the control circuit 543 may transmit the identification information of the electronic device 501, which is stored in a second memory (not illustrated) (e.g., the second memory 165 of FIG. 1 or the second memory 445 of FIG. 4), to the external electronic device 503. For example, the control circuit 543 may transmit the identification information of the electronic device 501 in a PLC manner by using the PLC circuit 545.

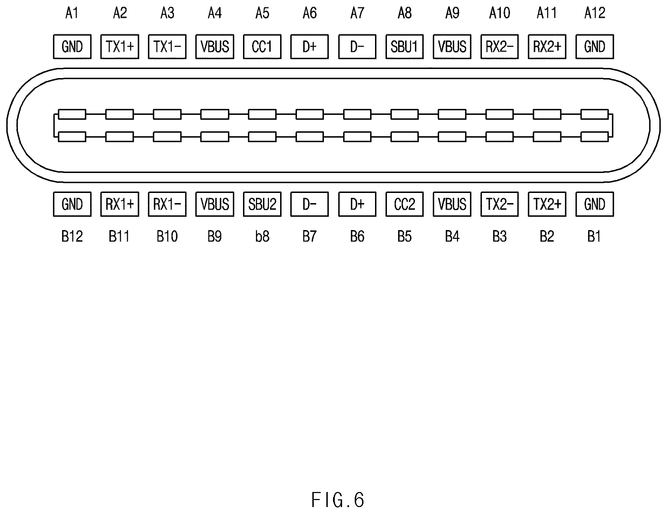

FIG. 6 is a diagram illustrating pins of a connecting terminal of USB type-C, according to an embodiment.

When an electronic device (e.g., the electronic device 101 of FIG. 1) is a USB type-C device, a connecting terminal (e.g., the connecting terminal 110 of FIG. 1) may include a GND pin A1, a GND pin A1, a TX1 + pin A2, a TX1- pin A3, a VBUS pin A4, a CC1 pin A5, a D+ A6, a D- A7, a SBU1 A8, a VBUS A9, a RX2- A10, a RX2+ A11, a GND A12, a GND pin B1, a TX2+ pin B2, a TX2- pin B3, a VBUS pin B4, a CC2 pin B5, a D+ pin B6, a D- pin B7, a SBU2 pin B8, a VBUS pin B9, a RX1- pin B10, a RX1+ pin B11, and a GND pin B12. Due to reversibility, the pins may be arranged in a mirrored configuration. Due to this structure, an interface (or a connector) of the electronic device 101 may be mounted to an interface of an external electronic device (e.g., the external electronic device 103 of FIG. 1) by rotating the interface of the electronic device 101 by 180 degrees. In this case, symmetrical pins may not be used together. For example, when TX1+ and TX1- are used, TX2+, TX2-, RX2+, RX2- may not be used. When RX1+, RX1- are used, RX2+, RX2-, TX2+, TX2- may not be used. For example, there may be a total of 24 pins (e.g., 12 pins on a top surface and 12 pins on a bottom surface) on a contact board, but the corresponding pins may not be used at the same time. A pin to be used may be determined by a cable to be connected, a connector at the end of the cable, and a connector connection state of a device connected to the connector.

According to an embodiment, the VBUS pins A4 and B4 may indicate a voltage bus. For example, the VBUS pin may be used to supply power and may be used to charge or power a device connected to a connecting terminal of USB type-C. A configuration channel (CC) pin (e.g., the CC1 A5 or the CC2 B5) may be used to identify the configuration and state of a connector and may also be used for communication. On the basis of the identified results, the electronic device 101 (or the external electronic device 103) may operate in a downstream facing port (DFP) mode or an upstream facing port (UFP) mode. For example, the DFP mode may mean a mode for providing data, and the UFP mode may mean a mode for receiving data. The GND pins A1 and B1 may indicate the ground used as a reference point for a voltage. For example, the GND pins A1 and B1 may be used as a return path for a current. The D+ pins A6 and B6 may indicate the polarity of a data line. For example, the D+ pins A6 and B6 may be used to transmit the positive polarity of data. The D- Pins A7 and B7 may indicate the negative polarity of the data line. For example, the D- Pins A7 and B7 may be used to transmit the negative polarity of data. The SBU pins (e.g., the SBU1 A8 and the SBU2 B8) may be used for additional sideband data transmission. The TX pins (e.g., the TX1+ A2, the TX1- A3, the TX2+ B2, and the TX2- B3) and the RX pins (e.g., the RX1+ B11, the RX1- B10, the RX2+ A11, and the RX2- A10) may be used for transmitting and receiving data.

According to an embodiment, the electronic device 101 may use a 1-wire communication method. The electronic device 101 may transmit identification information of the electronic device 101 to the external electronic device 103 through a 1-wire communication method. For example, the 1-wire communication may include power line communication (PLC). According to an embodiment, when the electronic device is a device including a connecting terminal of USB type-C, the electronic device 101 may transmit the identification information to the external electronic device 103 by using a VBUS pin line (e.g., the transmission line 120 of FIG. 1). For example, when the electronic device 101 is connected to a dedicated host device (e.g., the external electronic device 103) for obtaining the identification information of the electronic device 101 through the VBUS pin, the electronic device 101 may obtain a voltage within a predetermined first range from the dedicated host device through the VBUS pin line. When the electronic device 101 obtains the voltage within the predetermined first range, the electronic device 101 may transmit the identification information of the electronic device 101 to the dedicated host device through the VBUS pin line.

In the disclosure, the transmission line 120 for transmitting the identification information to the dedicated host device is not limited to the VBUS pin line. For example, the electronic device 101 may be connected to any one of pins of the connecting terminal of USB type-C (e.g., a CC pin, a SBU pin, or the like) with the dedicated host device for obtaining the identification information of the electronic device 101. The electronic device 101 may perform 1-wire communication through the one connected pin. The electronic device 101 may transmit the identification information of the electronic device 101 to the dedicated host device through the one connected pin.

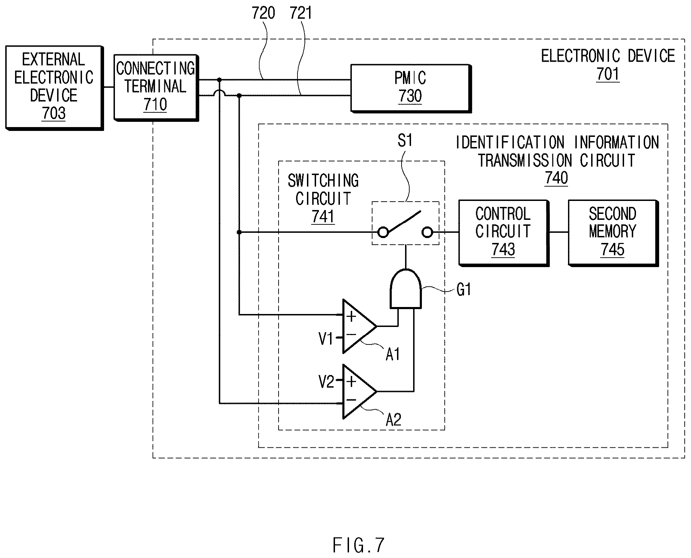

FIG. 7 is a circuit diagram in which an electronic device transmits identification information to an external electronic device, according to an embodiment. Hereinafter, descriptions identical to those of FIG. 4 will be omitted or briefly described.

According to an embodiment, an electronic device 701 (e.g., the electronic device 101 of FIG. 1) may be connected to an external electronic device 703 (e.g., the external electronic device 103 of FIG. 1) through a connecting terminal 710 (e.g., the connecting terminal 110 of FIG. 1). According to an embodiment, the electronic device 701 may include the connecting terminal 710, a PMIC 730 (e.g., the PMIC 130 of FIG. 1) and an identification information transmission circuit 740 (e.g., the identification information transmission circuit 160 of FIG. 1). The identification information transmission circuit 740 may include a switching circuit 741 (e.g., the switching circuit 161 of FIG. 1), a control circuit 743 (e.g., the control circuit 163 of FIG. 1), and a second memory 745 (e.g., the second memory 165 of FIG. 2). The external electronic device 703 may be electrically connected to components (e.g., the connecting terminal 710, the PMIC 730, and the identification information transmission circuit 740) of the electronic device 701 through a first transmission line 720 (e.g., the transmission line 120 of FIG. 1) and/or a second transmission line 721 (e.g., the transmission line 120 of FIG. 1).

According to an embodiment, the connecting terminal 710 may receive a voltage from the external electronic device 703 electrically connected. For example, the external electronic device 703 may include a general USB device and/or a dedicated host device for obtaining identification information of the electronic device 701. The connecting terminal 710 may electrically connect the PMIC 730 and the identification information transmission circuit 740 to the external electronic device 703.

According to an embodiment, when the external electronic device 703 is a general USB device, the electronic device 701 may transmit the applied voltage to the PMIC 730 through the first transmission line 720 (e.g., the VBUS pin A4 or B4 line of FIG. 6). According to an embodiment, when the external electronic device 703 is a dedicated host device for obtaining identification information of the electronic device 701, the electronic device 701 may transmit the applied voltage to the PMIC 730 and the identification information transmission circuit 740 through the second transmission line 721 (e.g., the CC pin line A5 or B5 of FIG. 6) different from the first transmission line 720.

According to an embodiment, when the electronic device 701 is in a default state, the identification information transmission circuit 740 may be deactivated. For example, when the electronic device 701 is in a default state, the identification information transmission circuit 740 may electrically disconnect the control circuit 743 and the connecting terminal 710. For example, the default state may include a state where the electronic device 701 is not connected to the external electronic device 703 and/or a state where a voltage within a predetermined second range is applied from the external electronic device 703.

According to an embodiment, when the voltage applied through the second transmission line 721 from the external electronic device 703 is greater than or equal to the first voltage V1 and the voltage applied through the first transmission line 720 is less than or equal to the second voltage V2 (e.g., including a case where there is no applied voltage), the identification information transmission circuit 740 may be activated. However, the condition that the identification information transmission circuit 740 is activated is not limited to the first voltage V1 or higher and the second voltage V2 or lower. For example, the condition that the identification information transmission circuit 740 is activated may include a condition that a voltage applied from the external electronic device 703 through the second transmission line 721 exceeds the first voltage V1. For example, the condition that the identification information transmission circuit 740 is activated may include a condition that the voltage applied through the first transmission line 720 is less than the second voltage V2. According to an embodiment, when the voltage applied through the second transmission line 721 from the external electronic device 703 connected to the connecting terminal 710 is greater than or equal to the first voltage V1 and there is no voltage applied through the first transmission line 720, the switching circuit 741 may electrically connect the control circuit 743 and the connecting terminal 710. For example, when the voltage applied through the second transmission line 721 is greater than or equal to V1 and the voltage applied through the first transmission line 720 is less than or equal to V2, the switching circuit 741 may electrically connect the control circuit 743 and the connecting terminal 710 by using the switching element S1, the two comparators A1 and A2, and the AND gate element G1.

According to an embodiment, the comparator A1 may output a signal indicating the comparison result depending on the level of the voltage applied to input terminal (+) through the second transmission line 721. The comparator A2 may output a signal indicating the comparison result depending on the level of the voltage applied to input terminal (-) through the first transmission line 720. According to an embodiment, when the voltage applied to input terminal (+) through the second transmission line 721 is greater than or equal to the first voltage V1, the comparator A1 may output a high-level signal. When the voltage is less than the first voltage V1 or there is no applied voltage, the comparator A1 may output a low-level signal. For example, a high-level signal may include a digital signal of '1', and a low-level signal may include a digital signal of '0'. When the voltage applied to input terminal (-) through the first transmission line 720 is less than or equal to the second voltage V2 or there is no applied voltage, the comparator A2 may output a high-level signal. When the voltage is greater than the second voltage V2, the comparator A1 may output a low-level signal.

According to an embodiment, the signal output through the two comparators A1 and A2 may be input to the AND gate element G1. According to an embodiment, the switching element S1 may be opened or closed based on the signal output through the two comparators A1 and A2 and the AND gate element G1. For example, when the signal output through the two comparators A1 and A2 and the AND gate element G1 corresponds to a high level, the switching element S1 may be closed. For example, when the signal output through the two comparators A1 and A2 and the AND gate element G1 corresponds to a low level, the switching element S1 may be opened.

According to an embodiment, when the external electronic device 703 is a dedicated host device for obtaining identification information of the electronic device 701, the electronic device 701 may obtain a voltage from the external electronic device 703 through the second transmission line 721. For example, when the voltage applied through the second transmission line 721 from the external electronic device 703 is greater than or equal to the first voltage V1 and there is no voltage applied through the first transmission line 720, the AND gate element G1 may output a signal corresponding to a high level. In this case, the switching element S1 may be closed.

According to an embodiment, when the external electronic device 703 is a general USB device, the electronic device 701 may obtain a voltage from the external electronic device 703 through the first transmission line 720. For example, when the voltage applied through the first transmission line 720 from the external electronic device 703 is greater than the second voltage V2 and there is no voltage applied through the second transmission line 721, the AND gate element G1 may output a signal corresponding to a low level. In this case, the switching element S1 may be opened. For example, in an embodiment of FIG. 7, when a dedicated host device that applies a voltage within a predetermined first range is connected, the electronic device 701 may activate the identification information transmission circuit 740 even when the electronic device 701 is turned off. When the general USB device is connected to the electronic device 701, a normal voltage within a predetermined second range is applied, and thus the switching element S1 may be opened. When the switching element S1 is opened, the identification information transmission circuit 740 may be deactivated.

Referring to FIG. 7, the switching circuit 741 is illustrated as including, but not limited to, the two comparators A1 and A2 and the one AND gate element G1. For example, the switching circuit 741 may not include a comparator. For example, the switching circuit 741 may include two or more comparators. For example, the switching circuit 741 may include at least one logic circuit gate element. For example, the switching circuit 741 may include one or more AND gate elements or OR gate elements. However, an embodiment is not limited thereto.

According to an embodiment, when being activated, the control circuit 743 may receive authentication information from the external electronic device 703 through the second transmission line 721. The control circuit 743 may determine whether the received authentication information is valid. For example, the receiving, by the control circuit 743, of authentication information and the determining whether the received authentication information is valid may be referenced by operation 340 and operation 350 of FIG. 3.

According to an embodiment, when determining that the received authentication information is valid, the control circuit 743 may transmit the identification information of the electronic device 701 to the external electronic device 703 transmitting the authentication information. According to an embodiment, when the received authentication information is valid, the control circuit 743 may transmit the identification information of the electronic device 701, which is stored in the second memory 745, to the external electronic device 703. For example, the control circuit 743 may read the identification information of the electronic device 701 stored in the second memory 745. For example, the control circuit 743 may transmit identification information of the electronic device 701, which is read from the second memory 745, to the external electronic device 703 through the second transmission line 721.

In an embodiment, the first voltage V1 and/or the second voltage V2 of FIG. 7 is an example. For example, the first voltage V1 and/or the second voltage V2 of FIG. 7 may be the same as or different from the first voltage V1 and/or the second voltage V2 of FIG. 4.

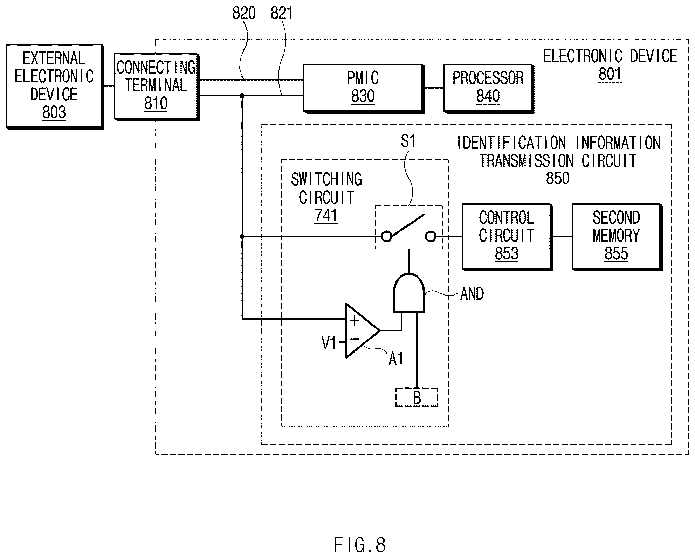

FIG. 8 is a circuit diagram in which an electronic device transmits identification information to an external electronic device, according to an embodiment. Hereinafter, descriptions identical to those of FIG. 7 will be omitted or briefly described.

According to an embodiment, an electronic device 801 (e.g., the electronic device 101 of FIG. 1) may be connected to an external electronic device 803 (e.g., the external electronic device 103 of FIG. 1) through the connecting terminal 810 (e.g., the connecting terminal 110 of FIG. 1). According to an embodiment, the electronic device 801 may include the connecting terminal 810, a PMIC 830 (e.g., the PMIC 130 of FIG. 1), a processor 840 (e.g., the processor 140 of FIG. 1), and an identification information transmission circuit 850 (e.g., the identification information transmission circuit 160 of FIG. 1). The identification information transmission circuit 850 may include a switching circuit 851 (e.g., the switching circuit 161 of FIG. 1), a control circuit 853 (e.g., the control circuit 163 of FIG. 1), and a second memory 855 (e.g., the second memory 165 of FIG. 2). The external electronic device 803 may be electrically connected to components (e.g., the connecting terminal 810, the PMIC 830, the processor 840, and the identification information transmission circuit 850) of the electronic device 801 through a first transmission line 820 (e.g., the transmission line 120 of FIG. 1) and/or a second transmission line 821 (e.g., the transmission line 120 of FIG. 1).

According to an embodiment, the connecting terminal 810 may receive a voltage from the external electronic device 803 electrically connected. For example, the external electronic device 803 may include a general USB device and/or a dedicated host device for obtaining identification information of the electronic device 801. The connecting terminal 810 may electrically connect the PMIC 830 and the identification information transmission circuit 850 to the external electronic device 803.

According to an embodiment, when the external electronic device 803 is a general USB device, the electronic device 801 may transmit the applied voltage to the PMIC 830 through the first transmission line 820 (e.g., the VBUS pin A4 or B4 line of FIG. 6). The PMIC 830 may activate the processor 840 by supplying at least part of the received voltage (alternatively, power or current) to the processor 840. According to an embodiment, when the external electronic device 803 is a dedicated host device for obtaining identification information of the electronic device 801, the electronic device 801 may transmit the applied voltage to the PMIC 830 and the identification information transmission circuit 850 through the second transmission line 821 (e.g., the CC pin line A5 or B5 of FIG. 6) different from the first transmission line 820.

According to an embodiment, the identification information transmission circuit 850 may electrically disconnect the control circuit 853 and the connecting terminal 810 in the default state. For example, the default state may include a state where the electronic device 801 is not connected to the external electronic device 803 and/or a state where a voltage within a predetermined second range is applied from the external electronic device 803. For example, the switching element S1 may be opened in a default state. For example, the switching element S1 may be in a disconnection state where the connecting terminal 810 is disconnected from the control circuit 853 in the default state.

According to an embodiment, when the voltage applied through the second transmission line 821 from the external electronic device 803 is greater than or equal to the first voltage V1 and there is no voltage applied through the first transmission line 820, the identification information transmission circuit 850 may be activated. According to an embodiment, the electronic device 801 may include a circuit capable of detecting a voltage state of the second transmission line 821. For example, it may include an analog-to-digital converter, and the analog-to-digital converter may detect a voltage state applied to the second transmission line 821. According to an embodiment, when the voltage applied through the second transmission line 821 from the external electronic device 803 connected to the connecting terminal 810 is greater than or equal to the first voltage V1 and there is no voltage applied through the first transmission line 820, the switching circuit 851 may electrically connect the control circuit 853 and the connecting terminal 810. For example, when the voltage applied through the second transmission line 821 is greater than or equal to the first voltage V1 and there is no voltage applied through the first transmission line 820, the switching circuit 851 may electrically connect the control circuit 853 and the connecting terminal 810 by using the switching element S1, the comparator A1, a 'B' signal, and the AND gate element G1.

According to an embodiment, the comparator A1 may output a signal indicating the comparison result depending on the level of the voltage applied through the second transmission line 821. According to an embodiment, when the voltage applied through the second transmission line 821 is greater than or equal to the first voltage V1, the comparator A1 may output a high-level signal. When the voltage is less than the first voltage V1 or there is no applied voltage, the comparator A1 may output a low-level signal. For example, a high-level signal may include a digital signal of '1', and a low-level signal may include a digital signal of '0'.

According to an embodiment, the 'B' signal may correspond to a signal output from a general purpose input output (GPIO) of the processor 840 and/or the PMIC 830, based on the voltage detected at the first transmission line 820. According to an embodiment, when the processor 840 is activated (e.g., when the electronic device 801 is turned on), the 'B' signal may be output as a low-level signal from the GPIO of the processor 840 and/or the PMIC 830. When the processor 840 is deactivated (e.g., when the electronic device 801 is turned off), the 'B' signal may be output as a high-level signal from the GPIO of the processor 840 and/or the PMIC 830. According to an embodiment, the electronic device 801 may detect a voltage on a transmission line (e.g., the first transmission line 820 or the second transmission line 821) and/or a voltage (e.g., a voltage supplied to the processor 840 by the PMIC 830) supplied to the processor 840. For example, when the voltage on the transmission line and/or the voltage supplied to the processor 840 corresponds to a processor driving voltage for activating the processor 840, the 'B' signal may be output as a low level signal. For example, when the voltage on the transmission line and/or the voltage supplied to the processor does not correspond to the processor driving voltage, the 'B' signal may be output as a high-level signal. According to an embodiment, the 'B' signal may be output from the processor 840. For example, the 'B' signal may include a signal corresponding to a low level (or a high level) output from the processor 840.

According to an embodiment, the electronic device 801 may include a 'B' element (not shown) that outputs the 'B' signal. For example, when a signal corresponding to the low level is received from the processor 840, the 'B' element may output the 'B' signal of a low level. For example, when the signal corresponding to the low level is not received from the processor 840, the 'B' element may output the 'B' signal of a high level.

According to an embodiment, the signal output through the comparator A1 and the 'B' signal may be input to the AND gate element G1. According to an embodiment, when both the signal output through the comparator A1 and the 'B' signal correspond to high-level signals, the switching element S1 may be closed. According to an embodiment, when at least one of the signal output through the comparator A1 or the 'B' signal corresponds to a low-level signal, the switching element S1 may be opened.

According to an embodiment, when the external electronic device 803 is a dedicated host device for obtaining identification information of the electronic device 801, the electronic device 801 may obtain a voltage from the external electronic device 803 through the second transmission line 821. For example, when the electronic device 801 is turned off and the applied voltage is greater than or equal to the first voltage V1, the switching element S1 may be closed. For example, when the electronic device 801 is turned on, the switching element S1 may be opened. For example, in the embodiment of FIG. 8, when the electronic device 801 is turned off and the processor 840 is deactivated, the electronic device 801 may activate the identification information transmission circuit 850 by obtaining a voltage within a predetermined first range.

According to an embodiment, when the voltage applied from the external electronic device 803 is within the predetermined first range, the switching element S1 may be closed. For example, when the voltage applied through the first transmission line 820 is less than or equal to a specified voltage (e.g., the second voltage V2 of FIG. 4 and/or FIG. 7), and the voltage applied through the second transmission line 821 is greater than or equal to the first voltage V1, the switching element S1 may be closed.

Referring to FIG. 8, the switching circuit 851 is illustrated as including, but not limited to, the one comparator A1 and the one AND gate element G1. For example, the switching circuit 851 may not include a comparator. For example, the switching circuit 851 may include one or more comparators. For example, the switching circuit 851 may include any logic circuit gate element. For example, the switching circuit 851 may include one or more AND gate elements or OR gate elements. However, an embodiment is not limited thereto.

According to an embodiment, when being activated, the control circuit 853 may receive authentication information from the external electronic device 803 through the second transmission line 821. The control circuit 853 may determine whether the received authentication information is valid. For example, the receiving, by the control circuit 853, of authentication information and the determining whether the received authentication information is valid may be referenced by operation 340 and operation 350 of FIG. 3.

According to an embodiment, when determining that the received authentication information is valid, the control circuit 853 may transmit the identification information of the electronic device 801 to the external electronic device 803 transmitting the authentication information. According to an embodiment, when the received authentication information is valid, the control circuit 853 may transmit the identification information of the electronic device 801, which is stored in the second memory 855, to the external electronic device 803. For example, the control circuit 853 may read the identification information of the electronic device 801 stored in the second memory 855. For example, the control circuit 853 may transmit identification information of the electronic device 801, which is read from the second memory 855, to the external electronic device 803 through the second transmission line 821.

In an embodiment, the first voltage V1 and/or the second voltage V2 of FIG. 8 is an example. For example, the first voltage V1 and/or the second voltage V2 of FIG. 8 may be the same as or different from the first voltage V1 and/or the second voltage V2 of FIG. 4 or 7.

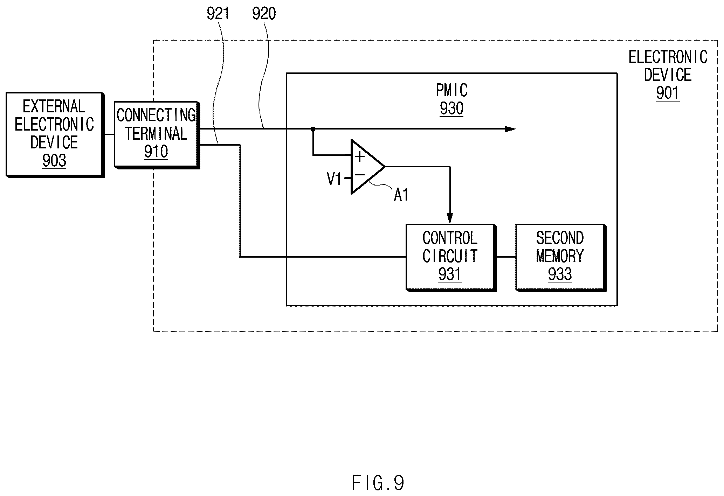

FIG. 9 is a circuit diagram in which an electronic device transmits identification information to an external electronic device, according to an embodiment. Hereinafter, descriptions identical to those of FIG. 8 will be omitted or briefly described.

According to an embodiment, an electronic device 901 (e.g., the electronic device 101 of FIG. 1) may be connected to an external electronic device 903 (e.g., the external electronic device 103 of FIG. 1) through a connecting terminal 910 (e.g., the connecting terminal 110 of FIG. 1). Unlike the circuit diagrams of the electronic device 401 of FIG. 4, the electronic device 701 of FIG. 7, and the electronic device 801 of FIG. 8, the electronic device 901 may add a circuit for performing an operation for transmitting identification information of the electronic device 901 to a PMIC 930 (e.g., the PMIC 130 of FIG. 1) without adding the identification information transmission circuits 440, 740, and 850. For example, the electronic device 901 may include the connecting terminal 910 and the PMIC 930, and the PMIC 930 may include a control circuit 931 (e.g., the control circuit 163 of FIG. 1) and a second memory 933 (e.g., the second memory 165 of FIG. 2).

According to an embodiment, the connecting terminal 910 may receive a voltage from the external electronic device 903 electrically connected. The connecting terminal 910 may electrically connect the PMIC 930 to the external electronic device 903 through a first transmission line 920 (e.g., the transmission line 120 of FIG. 1) and/or a second transmission line 921 (e.g., the transmission line 120 of FIG. 1).

According to an embodiment, the PMIC 930 may obtain a voltage from the external electronic device 903 connected to the connecting terminal 910 through the first transmission line 920. According to an embodiment, the PMIC 930 may include the comparator A1, the control circuit 931, and the second memory 933. For example, the second memory 933 may include identification information of the electronic device 901.

According to an embodiment, the comparator A1 may output a signal for activating the control circuit 931 depending on the voltage applied to the PMIC 930 through the first transmission line 920. According to an embodiment, when the voltage applied to the PMIC 930 through the first transmission line 920 is greater than or equal to the first voltage V1, the comparator A1 may output a signal for activating the control circuit 931. For example, the signal for activating the control circuit 931 may correspond to a signal including a voltage for driving the control circuit 931.

According to an embodiment, when being activated, the control circuit 931 may receive authentication information from the external electronic device 903 through the second transmission line 921. The control circuit 931 may determine whether the received authentication information is valid. When the received authentication information is valid, the control circuit 931 may transmit the identification information of the electronic device 901 to the external electronic device 903 through the second transmission line 921.

In an embodiment, the first voltage V1 of FIG. 9 is an example. For example, the first voltage V1 of FIG. 9 may be the same as or different from the first voltage V1 of FIG. 7 or 8.

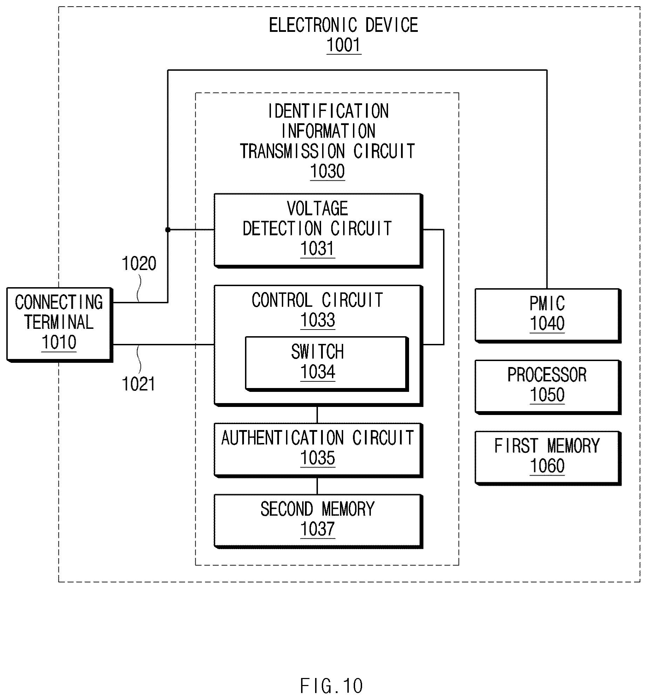

FIG. 10 is a block diagram of an electronic device configuration for transmitting identification information to an external electronic device, according to an embodiment. Hereinafter, descriptions identical to those of FIG. 1 will be omitted or briefly described.

Referring to FIG. 10, according to an embodiment, an electronic device 1001 (e.g., the electronic device 101 of FIG. 1) may include a connecting terminal 1010 (e.g., the connecting terminal 110 of FIG. 1), an identification information transmission circuit 1030 (e.g., the identification information transmission circuit 160 of FIG. 1), a PMIC 1040 (e.g., the PMIC 130 of FIG. 1), a processor 1050 (e.g., the processor 140 of FIG. 1), and a first memory 1060 (e.g., the first memory 150 of FIG. 1). According to an embodiment, the electronic device 1001 may be directly connected through the connecting terminal 1010 to an external electronic device (not shown) so as to communicate with the external electronic device. The electronic device 1001 may obtain a voltage through a first transmission line 1020 (e.g., the transmission line 120 of FIG. 1) from the external electronic device connected to the connecting terminal 1010. For example, the external electronic device may include a general USB device and/or a dedicated host device for obtaining identification information of the electronic device 1001.

According to an embodiment, the identification information transmission circuit 1030 may include a voltage detection circuit 1031, a control circuit 1033 (e.g., the control circuit 163 of FIG. 1), an authentication circuit 1035, and a second memory 1037 (e.g., the second memory 165 of FIG. 1). According to an embodiment, the voltage detection circuit 1031 may detect the voltage applied through the first transmission line 1020. For example, the voltage detection circuit 1031 may detect a voltage transmitted from the external electronic device to the PMIC 1040.

According to an embodiment, at least some of the components of the identification information transmission circuit 1030 may be omitted or may not be included in the components of the identification information transmission circuit. For example, referring to FIG. 10, the voltage detection circuit 1031 is illustrated as one of the components of the identification information transmission circuit 1030, but the voltage detection circuit 1031 may not be included in the identification information transmission circuit 1030. For example, the voltage detection circuit 1031 may be included in the component of the electronic device 1001, but may not be included in the component of the identification information transmission circuit 1030. For example, the voltage detection circuit 1031 may be included in the PMIC 1040 or another circuit unit (not shown).

According to an embodiment, when the voltage detection circuit 1031 is included in the PMIC 1040 or another circuit unit, the PMIC 1040 or another circuit unit may detect the voltage applied through the first transmission line 1020 by using the voltage detection circuit 1031. According to an embodiment, the PMIC 1040 or another circuit unit may detect the voltage applied through the first transmission line 1020 and may transmit a detection value to the identification information transmission circuit 1030. According to an embodiment, the identification information transmission circuit 1030 may receive the detection value of the voltage applied through the first transmission line 1020 from the PMIC 1040 or another circuit unit.

According to an embodiment, the control circuit 1033 may include a switch 1034 (e.g., the switching circuit 161 of FIG. 1). According to an embodiment, when the voltage detected by the voltage detection circuit 1031 is within a predetermined first range, the switch 1034 may electrically connect the control circuit 1033 to the connecting terminal 1010. According to an embodiment, when the detection value received from the PMIC 1040 or another circuit unit is within the predetermined first range, the switch 1034 may electrically connect the control circuit 1033 to the connecting terminal 1010. For example, the predetermined first range is as described above in FIG. 1.

According to an embodiment, when being electrically connected to the connecting terminal 1010, the control circuit 1033 may be activated. According to an embodiment, when being activated, the control circuit 1033 may receive authentication information from the external electronic device through a second transmission line 1021 (e.g., the transmission line 120 of FIG. 1) different from the first transmission line 1020. The control circuit 1033 may transmit the authentication information received from the external electronic device to the authentication circuit 1035. The authentication information may include data and/or a signal requesting the identification information of the electronic device 1001.

According to an embodiment, the authentication circuit 1035 may determine whether the authentication information received from the control circuit 1033 is valid. For example, the authentication circuit 1035 may determine whether the authentication information stored in the second memory 1037 matches authentication information received from the external electronic device. According to an embodiment, when the authentication information stored in the second memory 1037 matches the authentication information received from the external electronic device, the authentication circuit 1035 may transmit the identification information of the electronic device 1001 stored in the second memory 1037 to the control circuit 1033.

According to an embodiment, the control circuit 1033 may transmit the identification information of the electronic device 1001 to the external electronic device connected to the connecting terminal 1010. According to an embodiment, the control circuit 1033 may receive the identification information of the electronic device 1001 from the authentication circuit 1035. The control circuit 1033 may transmit the identification information of the electronic device 1001, which is received through the second transmission line 1021, to an external electronic device.

According to an embodiment, when being activated, the control circuit 1033 may store the identification information of the electronic device 1001 in the second memory 1037. According to an embodiment, when the identification information of the electronic device 1001 is not stored in the second memory 1037, the control circuit 1033 may receive the identification information from the external electronic device through the second transmission line 1021. The control circuit 1033 may store the received identification information in the second memory 1037.

According to an embodiment, the electronic device 101 includes the PMIC 130, 430, 530, 730, 830, 930, 1040, or 1188, at least one processor 140, 840, 1050, or 1120, at least one memory 150, 165, 445, 745, 855, 933, 1037, 1060, or 1130, the connecting terminal 110, 410, 510, 710, 810, 910, 1010, or 1178, the first transmission line 120, 420, 520, 721, or 821 connected to the connecting terminal and the PMIC, the control circuit 163, 443, 543, 743, 853, 931, or 1033 electrically connected to the at least one memory, and the switching circuit 161, 441, 541, 741, or 851 electrically connected between the connecting terminal and the control circuit.

According to an embodiment, when a voltage applied through the first transmission line from an external electronic device connected to the connecting terminal is within a predetermined first range, the switching circuit is configured to electrically connect the connecting terminal and the control circuit by changing a state of a switch from a first state to a second state such that the control circuit transmits the identification information to the external electronic device through the connecting terminal by supplying power to the control circuit.

According to an embodiment, the control circuit may transmit the identification information to the external electronic device through the first transmission line.

According to an embodiment, the control circuit may be activated by a voltage applied from the external electronic device when being electrically connected to the connecting terminal.

According to an embodiment, when being electrically connected to the connecting terminal, the control circuit may be activated in a state where the PMIC and the at least one processor are inactive.

According to an embodiment, the switching circuit may be configured to electrically disconnect the connecting terminal from the control circuit by changing the state of the switch from the second state to the first state, when a voltage applied through the first transmission line from the external electronic device connected to the connecting terminal is within a predetermined second range.

According to an embodiment, the electronic device may further include the second transmission line 120, 720, or 820, which is electrically connected to the PMIC and the connecting terminal and which is different from the first transmission line. For example, the first transmission line may correspond to a transmission line (e.g., a CC pin line) for transmitting identification information of the electronic device. The second transmission line may correspond to a transmission line (e.g., a VBUS pin line) for transmitting a power supply voltage of the electronic device to the PMIC.

According to an embodiment, the switching circuit may be configured to electrically disconnect the connecting terminal from the control circuit by changing the state of the switch from the second state to the first state, when a voltage applied through the second transmission line from the external electronic device connected to the connecting terminal is within a predetermined second range.

According to an embodiment, the PMIC may receive a voltage applied from the external electronic device connected to the connecting terminal through the first transmission line or the second transmission line.

According to an embodiment, the PMIC may supply at least part of the received voltage to the at least one processor.

According to an embodiment, the at least one processor may be activated when the supplied voltage is greater than or equal to a specified voltage.

According to an embodiment, the at least one processor may be configured to electrically disconnect the connecting terminal and the control circuit by changing the state of the switch from the second state to the first state, when being activated by receiving a voltage greater than or equal to a specified value from the PMIC.

According to an embodiment, the switching circuit may sense the voltage supplied from the PMIC to the at least one processor.

According to an embodiment, the switching circuit may electrically disconnect the connecting terminal and the control circuit by changing the state of the switch from the second state to the first state when the detected voltage corresponds to a processor driving voltage for activating the at least one processor.

According to an embodiment, the control circuit may be electrically isolated from the PMIC and deactivated when being electrically disconnected from the connecting terminal.

According to an embodiment, the switching circuit may include at least one comparator.

According to an embodiment, the at least one comparator may compare the voltage received from the external electronic device through the first transmission line or the second transmission line with at least one specified value.

According to an embodiment, the at least one comparator may output a signal indicating the result of comparing the received voltage with the at least one specified value.

The switching circuit may be configured to change the state of the switch from the first state to the second state or from the second state to the first state based on a signal output from the at least one comparator.

According to an embodiment, the control circuit may receive authentication information from the external electronic device through the first transmission line.

According to an embodiment, the control circuit may determine whether the authentication information is valid.

According to an embodiment, the control circuit may transmit the identification information to the external electronic device based on a determination that the authentication information is valid.

According to an embodiment, the control circuit may transmit the identification information to the external electronic device in a method of power line communication.

According to an embodiment, the identification information of the electronic device may include international mobile equipment identity (IMEI) information.

According to an embodiment, an electronic device may include a PMIC, at least one processor, at least one memory, a connecting terminal including a power pin and a communication pin, a voltage detection circuit, an authentication circuit, and a control circuit electrically connected to the connecting terminal, the voltage detection circuit, the authentication circuit, and the at least one memory.

According to an embodiment, the control circuit may detect a voltage applied through the power pin from the external electronic device connected to the connecting terminal.

According to an embodiment, when the detected voltage is within a predetermined first range, the control circuit may receive authentication information from the external electronic device through the communication pin.

According to an embodiment, the control circuit may determine whether the received authentication information is valid, by using the authentication circuit.

According to an embodiment, the control circuit may transmit identification information of the electronic device stored in the at least one memory to the external electronic device through the communication pin based on a determination that the received authentication information is valid.

According to an embodiment, the electronic device may further include a first transmission line electrically connected to the power pin and the PMIC.

According to an embodiment, the detected voltage may correspond to the voltage applied to the PMIC through the first transmission line.

According to an embodiment, the electronic device may further include a second transmission line, which is different from the first transmission line and which is electrically connected to the communication pin and the control circuit.

According to an embodiment, the control circuit may transmit identification information of the electronic device to the external electronic device through the second transmission line.

According to an embodiment, the control circuit may further include a switch.

According to an embodiment, the switch may electrically connect the control circuit to the connecting terminal when the detected voltage is within the predetermined first range.

According to an embodiment, the switch may electrically disconnect the control circuit from the connecting terminal when the detected voltage is within a predetermined second range.

According to an embodiment, the at least one processor may be deactivate when the detected voltage is within the predetermined first range.

According to an embodiment, a method for providing identification information of an electronic device may include an operation of detecting a voltage obtained from an external electronic device.

According to an embodiment, the method for providing identification information of the electronic device may include receiving authentication information from the external electronic device when the detected voltage is within a predetermined first range.

According to an embodiment, the method for providing identification information of the electronic device may include determining whether the received authentication information is valid.

According to an embodiment, the method of providing identification information of the electronic device may include transmitting identification information of the electronic device to the external electronic device based on a determination that the received authentication information is valid.

According to an embodiment, the method of providing identification information of the electronic device may include activating by a voltage applied from the external electronic device when the external electronic device is electrically connected to a connecting terminal of the electronic device.

FIG. 11 is a block diagram of an electronic device in a network environment, according to various embodiments.

FIG. 11 is a block diagram of an electronic device 1101 in a network environment 1100, according to various embodiments. Referring to FIG. 1, the electronic device 1101 in the environment information 1100 may communicate with an electronic device 1102 over a first network 1198 (e.g., a short range wireless communication network) or may communicate with at least one of an electronic device 1104 or a server 1108 over a second network 1199 (e.g., a long distance wireless communication network). The electronic device 1101 may communicate with the electronic device 1104 through the server 1108. According to an embodiment, the electronic device 1101 may include a processor 1120, a memory 1130, an input module 1150, a sound output module 1155, a display module 1160, an audio module 1170, a sensor module 1176, an interface 1177, a connecting terminal 1178, a haptic module 1179, a camera module 1180, a power management module 1188, a battery 1189, a communication module 1190, a subscriber identification module 1196, or an antenna module 1197. In any embodiment, the electronic device 1101 may not include at least one (e.g., the connecting terminal 1178) of the above-described components or may further include one or more other components. In some embodiments, some (e.g., the sensor module 1176, the camera module 1180, or the antenna module 1197) of these components may be integrated into a single component (e.g., the display module 1160).

For example, the processor 1120 may execute software (e.g., a program 1140) to control at least another component (e.g., hardware or software component) of the electronic device 1101 connected to the processor 1120, and may process and calculate various types of data. According to an embodiment, as at least part of data processing or calculation, the processor 1120 may store instructions or data received from other components (e.g., the sensor module 1176 or the communication module 1190) into a volatile memory 1132, may process instructions or data stored in the volatile memory 1132, and may store the result data in a nonvolatile memory 1134. According to an embodiment, the processor 1120 may include a main processor 1121 (e.g., a central processing unit or an application processor) and an auxiliary processor 1123 (e.g., a graphic processing unit, a neural processing unit (NPU), an image signal processor, a sensor hub processor, or a communication processor) capable of operating independently or together with the main processor. For example, when the electronic device 1101 includes the main processor 1121 and the auxiliary processor 1123, the auxiliary processor 1123 may be configured to use less power than the main processor 1121 or to be specialized for a specified function. The auxiliary processor 1123 may be implemented separately from the main processor 1121 or as part of the main processor 121.

For example, the auxiliary processor 1123 may control at least part of the functions or states associated with at least one (e.g., the display module 1160, the sensor module 1176, or the communication module 1190) of the components of the electronic device 1101, instead of the main processor 1121 while the main processor 1121 is in an inactive (e.g., sleep) state or together with the main processor 1121 while the main processor 1121 is in an active (e.g., the execution of an application) state. According to an embodiment, the auxiliary processor 1123 (e.g., an image signal processor or a communication processor) may be implemented as a part of operatively associated other components (e.g., the camera module 1180 or the communication module 1190). According to an embodiment, the auxiliary processor 1123 (e.g., a neural network processing unit) may include a hardware structure specialized to process an artificial intelligence model. The artificial intelligence model may be generated through machine learning. For example, the learning may be performed in the electronic device 1101, in which an artificial intelligence model is performed, or may be performed through a separate server (e.g., the server 1108). For example, the learning algorithm may include supervised learning, unsupervised learning, semi-supervised learning, or reinforcement learning, but is not limited to the above example. The artificial intelligence model may include a plurality of artificial neural network layers. The artificial neural network may be one of a deep neural network (DNN), a convolutional neural network (CNN), a recurrent neural network (RNN), a restricted Boltzmann machine (RBM), a deep belief network (DBN), a bidirectional recurrent deep neural network (BRDNN), a deep Q-network, or a combination of two or more of the networks, but may not be limited to the above-described example. In addition to a hardware structure, additionally or alternatively, the artificial intelligence model may include a software structure.

The memory 1130 may store various pieces of data used by at least one component (e.g., the processor 1120 or the sensor module 1176) of the electronic device 1101. For example, data may include software (e.g., the program 1140) and input data or output data for instructions associated with the software. The memory 1130 may include the volatile memory 1132 or the nonvolatile memory 1134.

The program 1140 may be stored in the memory 1130 as software, and may include, for example, an operating system 1142, a middleware 1144, or an application 1146.

The input module 1150 may receive instructions or data to be used for the component (e.g., the processor 1120) of electronic device 1101, from the outside (e.g., a user) of the electronic device 1101. The input module 1150 may include, for example, a microphone, a mouse, a keyboard, a key (e.g., a button), or a digital pen (e.g., a stylus pen).

The sound output module 1155 may output a sound signal to the outside of the electronic device 1101. The sound output module 1155 may include, for example, a speaker or a receiver. The speaker may be used for a general purpose, such as multimedia play or recording play. The receiver may be used to receive an incoming call. According to an embodiment, the receiver may be implemented separately from the speaker or may be implemented as a part of the speaker.

The display module 1160 may visually provide information to the outside (e.g., the user) of the electronic device 1101. The display module 1160 may include, for example, a display, a hologram device, or a control circuit for controlling a projector and a corresponding device. According to an embodiment, the display module 1160 may include a touch sensor configured to sense a touch, or a pressure sensor configured to measure the strength of force generated by the touch.

The audio module 1170 may convert sound to an electrical signal, or reversely, may convert an electrical signal to sound. According to an embodiment, the audio module 1170 may obtain sound through the input module 1150, or may output sound through the sound output module 1155, or through an external electronic device (e.g., the electronic device 1102) (e.g., a speaker or a headphone) directly or wirelessly connected with the electronic device 1101.

The sensor module 1176 may sense an operation state (e.g., power or a temperature) of the electronic device 1101 or an external environment state (e.g., a user state), and may generate an electrical signal or a data value corresponding the sensed state. According to an embodiment, the sensor module 1176 may include, for example, a gesture sensor, a gyro sensor, a barometric pressure sensor, a magnetic sensor, an acceleration sensor, a grip sensor, a proximity sensor, a color sensor, an infrared (IR) sensor, a biometric sensor, a temperature sensor, a humidity sensor, or an illumination sensor.

The interface 1177 may support one or more specified protocols that may be used to directly and wirelessly connect the electronic device 1101 with an external electronic device (e.g., the electronic device 1102). According to an embodiment, the interface 1177 may include, for example, a high definition multimedia interface (HDMI), a universal serial bus (USB) interface, a secure digital (SD) card interface, or an audio interface.

The connecting terminal 1178 may include a connector that may allow the electronic device 1101 to be physically connected with an external electronic device (e.g., the electronic device 1102). According to an embodiment, the connecting terminal 1178 may include, for example, a HDMI connector, an USB connector, an SD card connector, or an audio connector (e.g., a headphone connector).

The haptic module 1179 may convert an electrical signal to a mechanical stimulation (e.g., vibration or movement) or an electrical stimulation which the user may perceive through the sense of touch or the sense of movement. According to an embodiment, the haptic module 1179 may include, for example, a motor, a piezoelectric sensor, or an electrical stimulation device.

The camera module 1180 may shoot a still image or a video image. According to an embodiment, the camera module 1180 may include one or more lenses, image sensors, image signal processors, or flashes (or electrical flashes).

The power management module 1188 may manage the power which is supplied to the electronic device 1101. According to an embodiment, the power management module 1188 may be implemented, for example, as at least part of a power management integrated circuit (PMIC).

The battery 1189 may power at least one component of the electronic device 1101. According to an embodiment, the battery 1189 may include, for example, a primary cell not rechargeable, a secondary cell rechargeable, or a fuel cell.

The communication module 1190 may establish a direct (or wired) communication channel or a wireless communication channel between the electronic device 1101 and an external electronic device (e.g., the electronic device 1102, the electronic device 1104, or the server 1108) and may perform communication through the established communication channel. The communication module 1190 may include one or more communication processors which are operated independently of the processor 1120 (e.g., an application processor) and support direct (or wired) communication or wireless communication. According to an embodiment, the communication module 1190 may include a wireless communication module 1192 (e.g., a cellular communication module, a short range wireless communication module, or a global navigation satellite system (GNSS) communication module) or a wired communication module 1194 (e.g., a local area network (LAN) communication module or a power line communication module). The corresponding communication module among these communication modules may communicate with an external electronic device 1104 through a first network 1198 (e.g., a short-range communication network such as Bluetooth, wireless fidelity (WiFi) direct or infrared data association (IrDA)) or a second network 1199 (e.g., long-range wireless communication network such as a legacy cellular network, 5G networks, next-generation communication networks, Internet, or computer networks (e.g., LAN or WAN)). The above-described kinds of communication modules may be integrated in one component (e.g., a single chip) or may be implemented with a plurality of components (e.g., a plurality of chips) which are independent of each other. The wireless communication module 1192 may identify or authenticate the electronic device 1101 within a communication network, such as the first network 1198 or the second network 1199, by using subscriber information (e.g., international mobile subscriber identity (IMSI)) stored in the subscriber identification module 1196.

The wireless communication module 1192 may support a 5G network and a next-generation communication technology after a 4G network, for example, a new radio (NR) access technology. The NR access technology may support enhanced mobile broadband (eMBB), massive machine type communications (mMTC), or ultra-reliable and low-latency communications (URLLC). For example, the wireless communication module 1192 may support a high frequency band (e.g., mmWave band) to achieve a high data transfer rate. The wireless communication module 1192 may support various technologies for securing performance in a high frequency band, for example, technologies such as beamforming, massive multiple-input and multiple-output (massive MIMO), full dimensional MIMO (FD-MIMO), an array antenna, analog beamforming, and a large scale antenna. The wireless communication module 1192 may support various requirements regulated in the electronic device 1101, an external electronic device (e.g., the electronic device 1104) or a network system (e.g., the second network 1199). According to an embodiment, the wireless communication module 1192 may support peak data rate (e.g., 20 Gbps or more) for eMBB implementation, loss coverage (e.g., 164 dB or less) for mMTC implementation, or U-plane latency (e.g., downlink (DL) of 0.5 ms or less and uplink (UL) of 0.5 ms or less, or round trip of 1 ms or less) for URLLC implementation.

The antenna module 1197 may transmit a signal or a power to the outside (e.g., an external electronic device) or may receive a signal or a power from the outside. According to an embodiment, the antenna module 1197 may include an antenna including a radiator formed of a conductor or a conductive pattern formed on a substrate (e.g., PCB). According to an embodiment, the antenna module 1197 may include a plurality of antennas (e.g., an array antenna). In this case, at least one antenna suitable for a communication scheme used in a communication network such as the first network 1198 or the second network 1199 may be selected, for example, by the communication module 1190 from the plurality of antennas. The signal or power may be exchanged between the communication module 1190 and an external electronic device through the selected at least one antenna or may be received from the external electronic device through the selected at least one antenna and the communication module 190. According to some embodiments, other parts (e.g., radio frequency integrated circuit (RFIC)) may be additionally formed as a part of the antenna module 1197 in addition to the radiator.

According to various embodiments, the antenna module 1197 may form an mmWave antenna module. According to an embodiment, the mmWave antenna module may include a printed circuit board (PCB), a radio frequency integrated circuit (RFIC), and a plurality of antennas (e.g., an array antenna). The RFIC may be disposed on or adjacent to a first surface (e.g., a bottom surface) of the PCB and may support a specified high frequency band (e.g., mmWave band). The plurality of antennas may be disposed on or adjacent to a second surface (e.g., a top surface or a side surface) of the PCB and may transmit or receive a signal in the specified high frequency band.

At least some of the components may be connected to each other through a communication scheme (e.g., a bus, a general purpose input and output (GPIO), a serial peripheral interface (SPI), or a mobile industry processor interface (MIPI)) between peripheral devices and may exchange signals (e.g., commands or data) with each other.

According to an embodiment, the command or data may be transmitted or received between the electronic device 1101 and the external electronic device 1104 through the server 1108 connected to the second network 1199. Each of the external electronic device 1102 or 1104 may be a device of which the type is the same as or different from that of the electronic device 1101. According to an embodiment, all or a part of operations to be executed by the electronic device 1101 may be executed in one or more external electronic devices among the external electronic devices 1102, 1104, or 1108. For example, when the electronic device 1101 needs to perform any function or service automatically or in response to a request from the user or any other device, the electronic device 1101 may additionally request one or more external electronic devices to perform at least part of the function or service, instead of internally executing the function or service. The one or more external electronic devices which receive the request may execute at least a part of the function or service thus requested or an additional function or service associated with the request, and may provide a result of the execution to the electronic device 1101. The electronic device 1101 may process the result as it is or additionally, and may provide a result of the processing as at least a part of the response to the request. To this end, for example, cloud computing, distributed computing, mobile edge computing (MEC), or client-server computing may be used. For example, the electronic device 1101 may provide an ultra-low latency service by using distributed computing or mobile edge computing. In another embodiment, the external electronic device 1104 may include an Internet of Things (IoT) device. The server 1108 may be an intelligent server using machine learning and/or a neural network. According to an embodiment, the external electronic device 1104 or the server 1108 may be included in the second network 1199. The electronic device 1101 may be applied to an intelligent service (e.g., a smart home, a smart city, a smart car, or a healthcare) based on 5G communication technology and IoT-related technology.

The electronic device according to various embodiments disclosed in the disclosure may be various types of devices. The electronic device may include, for example, a portable communication device (e.g., a smartphone), a computer device, a portable multimedia device, a mobile medical appliance, a camera, a wearable device, or a home appliance. An electronic device according to an embodiment of this specification may not be limited to the above-described electronic devices.

Various embodiments of the disclosure and terms used herein are not intended to limit the technical features described in the disclosure to specific embodiments, and it should be understood that the embodiments and the terms include modification, equivalent, or alternative on the corresponding embodiments described herein. With regard to description of drawings, similar or related components may be marked by similar reference marks/numerals. The singular form of the noun corresponding to an item may include one or more of items, unless interpreted otherwise in context. In the disclosure, the expressions "A or B", "at least one of A and B", "at least one of A or B", "A, B, or C", "at least one of A, B, and C", and "at least one of A, B, or C" may include any and all combinations of one or more of the associated listed items. The terms, such as "first" or "second" may be used to simply distinguish the corresponding component from the other component, but do not limit the corresponding components in other aspects (e.g., importance or order). When a component (e.g., a first component) is referred to as being "coupled with/to" or "connected to" another component (e.g., a second component) with or without the term of "operatively" or "communicatively", it may mean that a component is connectable to the other component, directly (e.g., by wire), wirelessly, or through the third component.

In various embodiments of the disclosure, the term "module" used herein may include a unit, which is implemented with hardware, software, or firmware, and may be interchangeably used with the terms "logic", "logical block", "part", or "circuit". The "module" may be a minimum unit of an integrated part or may be a minimum unit of the part for performing one or more functions or a part thereof. For example, according to an embodiment, the module may be implemented in the form of an application-specific integrated circuit (ASIC).

Various embodiments of the disclosure may be implemented with software (e.g., program 1140) including one or more instructions stored in a storage medium (e.g., the embedded memory 1136 or the external memory 1138) readable by a machine (e.g., the electronic device 1101). For example, the processor (e.g., the processor 1120) of the machine (e.g., the electronic device 1101) may call at least one instruction of the stored one or more instructions from a storage medium and then may execute the at least one instruction. This enables the machine to operate to perform at least one function depending on the called at least one instruction. The one or more instructions may include a code generated by a complier or a code executable by an interpreter. The machine-readable storage medium may be provided in the form of a non-transitory storage medium. Herein, 'non-transitory' just means that the storage medium is a tangible device and does not include a signal (e.g., electromagnetic waves), and this term does not distinguish between the case where data is semipermanently stored in the storage medium and the case where the data is stored temporarily.

According to an embodiment, a method according to various embodiments disclosed herein may be provided to be included in a computer program product. The computer program product may be traded between a seller and a buyer as a product. The computer program product may be distributed in the form of a machine-readable storage medium (e.g., compact disc read only memory (CD-ROM)) or may be distributed (e.g., downloaded or uploaded), through an application store (e.g., PlayStore^{™}), directly between two user devices (e.g., smartphones), or online. In the case of on-line distribution, at least part of the computer program product may be at least temporarily stored in the machine-readable storage medium such as the memory of a manufacturer's server, an application store's server, or a relay server or may be generated temporarily.

According to various embodiments, each component (e.g., a module or a program) of the above-described components may include a single entity or a plurality of entities, and some of the plurality of objects may be separately arranged on other components. According to various embodiments, one or more components of the above-described components or operations may be omitted, or one or more other components or operations may be added. Alternatively or additionally, a plurality of components (e.g., a module or a program) may be integrated into one component. In this case, the integrated component may perform one or more functions of each component of the plurality of components in the manner same as or similar to being performed by the corresponding component of the plurality of components prior to the integration. According to various embodiments, operations executed by modules, programs, or other components may be executed by a successive method, a parallel method, a repeated method, or a heuristic method. Alternatively, at least one or more of the operations may be executed in another order or may be omitted, or one or more operations may be added.

## Claims

1. An electronic device (801) comprising:
a power management integrated circuit, PMIC (830);
at least one processor (840);
a connecting terminal (810);
at least one memory (855) configured to store identification information of the electronic device (801);
a first transmission line (820) electrically connected to the connecting terminal (810) and the PMIC (830);
a control circuit (853) electrically connected to the at least one memory (855); and
a switching circuit (741) electrically connected between the connecting terminal (810) and the control circuit (853),
wherein when a voltage applied through the first transmission line (820) from an external electronic device (803) connected to the connecting terminal (810) is within a predetermined first range, the switching circuit (741) is configured to electrically connect the connecting terminal (810) and the control circuit (853) by changing a state of a switch from a first state to a second state, and the control circuit (853) is configured to transmit the identification information to the external electronic device (803) through the connecting terminal (810) by supplying power to the control circuit (853).

2. The electronic device (801) of claim 1, wherein the control circuit (853) is configured to be activated by a voltage applied from the external electronic device (803) when being electrically connected to the connecting terminal (810).

3. The electronic device (801) of claim 1 or 2, wherein the control circuit (853) is configured to activate the PMIC (830) and the at least one processor (840) in an inactive state when being electrically connected to the connecting terminal (810).

4. The electronic device (801) of any one of claims 1 to 3, wherein the switching circuit (741) is configured to electrically disconnect the connecting terminal (810) and the control circuit (853) by changing the state of the switch from the second state to the first state, when the voltage applied through the first transmission line (820) from the external electronic device (803) connected to the connecting terminal (810) is within a predetermined second range.

5. The electronic device (801) of any one of claims 1 to 3, further comprising:
a second transmission line (821), which is electrically connected to the PMIC (830) and the connecting terminal (810) and which is different from the first transmission line (820),
wherein the switching circuit (741) is configured to electrically disconnect the connecting terminal (810) and the control circuit (853) by changing the state of the switch from the second state to the first state, when a voltage applied through the second transmission line (821) from the external electronic device (803) connected to the connecting terminal (810) is within a predetermined second range.

6. The electronic device (801) of any one of claim 4 or 5, wherein the PMIC (830) is configured to:
receive a voltage applied from the external electronic device (803) connected to the connecting terminal (810); and
supply at least part of the received voltage to the at least one processor (840), and
wherein the at least one processor (840) is configured to be activated when a voltage supplied from the PMIC (830) is greater than or equal to a specified value.

7. The electronic device (801) of any one of claims 1 to 6, wherein the at least one processor (840) is configured to electrically disconnect the connecting terminal (810) and the control circuit (853) by changing the state of the switch from the second state to the first state, when being activated by receiving a voltage greater than or equal to a specified value from the PMIC (830).

8. The electronic device (801) of any one of claims 1 to 7, wherein the switching circuit (741) is configured to:
detect a voltage supplied by the PMIC (830) to the at least one processor (840); and
when the detected voltage corresponds to a processor driving voltage for activating the at least one processor (840), electrically disconnect the connecting terminal (810) and the control circuit (853) by changing the state of the switch from the second state to the first state.

9. The electronic device (801) of any one of claim 4, 5, 7, or 8, wherein the control circuit (853) is configured to be electrically isolated from the PMIC (830) and deactivated when being electrically disconnected from the connecting terminal (810).

10. The electronic device (801) of any one of claim 4 or 5, wherein the switching circuit (741) includes at least one comparator,
wherein the at least one comparator is configured to:
compare a voltage received from the external electronic device (803) with at least one specified value; and
output a signal indicating the result of comparing the received voltage with the at least one specified value, and
wherein the switching circuit (741) is configured to:
change the state of the switch from the first state to the second state or from the second state to the first state based on the signal output from the at least one comparator.

11. The electronic device (801) of claim 2, wherein the control circuit (853) is configured to:
receive authentication information from the external electronic device (803) through the first transmission line (820);
determine whether the authentication information is valid; and
transmit the identification information to the external electronic device (803) based on a determination that the authentication information is valid.

12. The electronic device (801) of any one of claims 1 to 11, wherein the control circuit (853) is configured to transmit the identification information to the external electronic device (803) in a method of power line communication.

13. The electronic device (801) of any one of claims 1 to 12, wherein the identification information of the electronic device (401) includes international mobile equipment identity, IMEI, information.

14. A method for providing identification information of an electronic device (801), the method comprising:
detecting a voltage obtained from an external electronic device (803);
when the detected voltage is within a predetermined first range, receiving authentication information from the external electronic device (803);
determining whether the received authentication information is valid; and
transmitting the identification information of the electronic device (801) to the external electronic device (803) based on a determination that the received authentication information is valid.

15. The method of claim 14, further comprises:
activating a control circuit (853) of the electronic device (801) by a voltage applied from the external electronic device (803) when the external electronic device (803) is electrically connected to a connecting terminal (810) of the electronic device (801).
